# EUROPÄISCHE PATENTSCHRIFT

(11) **EP 2 852 528 B1**
(45) Veröffentlichungstag und Bekanntmachung des Hinweises auf die Patenterteilung: **18.09.2019**
(21) Anmeldenummer: 13724240.0
(22) Anmeldetag: 17.05.2013
(51) Int. Cl.: B64C 27/08, B64C 27/20, B64C 29/00

(54) **VERFAHREN ZUM STEUERN EINES FLUGGERÄTS IN FORM EINES MULTICOPTERS UND ENTSPRECHENDES STEUERUNGSSYSTEM**
METHOD FOR CONTROLLING AN AIRCRAFT IN THE FORM OF A MULTICOPTER AND CORRESPONDING CONTROL SYSTEM
PROCÉDÉ DE COMMANDE D'UN APPAREIL VOLANT SOUS FORME D'UN MULTICOPTÈRE ET SYSTÈME DE COMMANDE CORRESPONDANT

(30) Priorität: 21.05.2012 DE 102012009865
(43) Veröffentlichungstag der Anmeldung: 01.04.2015
(73) Patentinhaber: Volocopter GmbH, 76646 Bruchsal (DE)
(72) Erfinder: WOLF, Stephan, 76137 Karlsruhe (DE); RUF, Thomas, 77880 Sasbach-Obersasbach (DE)
(74) Vertreter: Lemcke, Brommer & Partner Patentanwälte Partnerschaft mbB
(86) Internationale Anmeldenummer: PCT/EP2013/060267
(87) Internationale Veröffentlichungsnummer: WO 2013/174751

(56) Entgegenhaltungen:
- WO-A2-2008/147484
- DE-A1-102005 010 336
- DE-U1-202012 001 750

## Beschreibung

Die Erfindung betrifft ein Verfahren nach dem Oberbegriff des Anspruchs 1 zum Steuern eines Fluggeräts in Form eines Multicopters, welcher Multicopter mehrere, vorzugsweise in einer gemeinsamen Rotorebene angeordnete, redundante Rotoren aufweist, um einerseits Auftrieb und andererseits - durch Neigung der wenigstens einen Rotorebene - auch Vortrieb zu erzeugen, wobei Lageregelung und Steuerung des Multicopters durch Veränderung von Rotordrehzahlen in Abhängigkeit von Piloten-Steuerbefehlen erfolgen.

Außerdem betrifft die Erfindung ein Steuerungssystem nach dem Oberbegriff des Anspruchs 21 für ein Fluggerät in Form eines Multicopters, welcher Multicopter mehrere, vorzugsweise in einer gemeinsamen Rotorebene angeordnete, redundante Rotoren aufweist, um einerseits Auftrieb und andererseits - durch Neigung der wenigstens einen Rotorebene - auch Vortrieb zu erzeugen, wobei Lagerregelung und Steuerung des Multicopters durch Veränderungen von Rotordrehzahlen in Abhängigkeit von Piloten-Steuerbefehlen erfolgen.

Außerdem betrifft die Erfindung ein Fluggerät nach dem Oberbegriff des Anspruchs 40 in Form eines Multicopters, welcher Multicopter mehrere, vorzugsweise in einer gemeinsamen Rotorebene angeordnete, redundante Rotoren, umfassend jeweils wenigstens einen Elektromotor und einen Propeller, aufweist, um einerseits Auftrieb und andererseits - durch Neigung der wenigstens einen Rotorebene im Raum - auch Vortrieb zu erzeugen, wobei Lagerregelung und Steuerung des Multicopters durch Veränderungen von Rotordrehzahlen in Abhängigkeit von Piloten-Steuerbefehlen erfolgen.

Aus der DE 20 2012 001 750 U1 ist ein Fluggerät in Form eines senkrecht startenden und landenden Multicopters bekannt, welches Fluggerät unter Rückgriff auf ein gattungsgemäßes Verfahren steuerbar ist bzw. ein entsprechendes gattungsgemäßes Steuerungssystem aufweist.

Bei einem "Multicopter" handelt es sich hier und im Folgenden um ein Luftfahrzeug, das mehrere, vorzugsweise in einer gemeinsamen Ebene angeordnete, senkrecht nach unten wirkende Rotoren oder Propeller benutzt, um Auftrieb und - durch Neigung der insbesondere einen Rotorebene - auch Vortrieb zu erzeugen. Ein Multicopter gehört zu den Rotorflüglern und kann wie diese senkrecht starten und landen.

Multicopter benutzen im Gegensatz zu herkömmlichen Hubschraubern keine mechanischen Steuerelemente. Die Rotoren bzw. Propeller haben einen festen Anstellwinkel ("Pitch") und sind nicht verstellbar, was die Herstellungskosten verringert und die Wartungserfordernisse reduziert.

Änderungen des Auftriebs erfolgen ausschließlich durch Erhöhung oder Verringerung (Veränderung) der Motordrehzahl bei den zum Antrieb der Propeller eingesetzten Elektromotoren. Hier und im Folgenden bezeichnet "Rotor" die Kombination aus Elektromotor und Propeller, während "Propeller" lediglich die eigentliche Luftschraube als solche bezeichnet.

Die Rotoren bewegen sich beim Multicopter gegenläufig - die eine Hälfte im Uhrzeigersinn, die andere Hälfte gegen den Uhrzeigersinn. Dadurch heben sich die von den Propellern auf das Traggestell des Multicopters übertragenen Drehmomente um die Hochachse auf, sofern die Summe die Kräfte der links-bzw. rechtsdrehenden Propeller gleich ist.

Eine Drehung des Multicopters um die Hochachse (Gier-Achse) kann durch unterschiedliche Drehzahlen der links- und rechtsdrehenden Rotoren erreicht werden. Zur Neigung um die Querachse (Nicken) wird die Drehzahl der vorderen und der hinteren Rotoren variiert, zur Neigung um die Längsachse (Rollen) die der links und rechts sitzenden Rotoren. Durch die Neigung entsteht nicht nur vertikaler Schub, sondern auch horizontaler - dadurch ist eine Fortbewegung in jede beliebige Richtung möglich.

Multicopter sind aerodynamisch instabil. Nur durch permanente Regelung der Drehzahl der einzelnen Rotoren ist ein stabiles Flugverhalten zu erreichen.

Der Pilot des Multicopters steuert nicht die Drehzahl einzelner Motoren, sondern gibt nur Parameter vor, wie beispielsweise Flugrichtung, Geschwindigkeit, Steig- oder Sinkrate usw. Dies kann beispielsweise über Steuerknüppel (Joysticks), Schalter und ähnliche Bedienelemente erfolgen.

Bei einem zur Personenbeförderung eingesetzten Multicopter ist es unabdingbar, dass die gesamte Steuerung äußerst zuverlässig arbeitet. Der Ausfall einzelner Komponenten, z. B. einzelner Sensoren, Regelprozessoren oder Motoren, darf nicht zu einer Gefährdung der Manövrierbarkeit oder zum Absturz des Multicopters führen.

Außerdem existieren bereits unbemannte Multicopter, beispielsweise für den Modellflug oder als Überwachungsdrohnen, welche typischerweise über eine zentrale Regelung verfügen, die die Solldrehzahl für alle Rotoren ermittelt und an die betreffenden Motorcontroller weiterleitet. Ein Ausfall dieser zentralen Regelung führt quasi zwangsläufig zum Verlust der Steuerbarkeit des Multicopters und zu dessen Absturz.

In der bemannten Luftfahrt ist es üblich, kritische Komponenten redundant auszulegen, z. B. doppelt oder dreifach. In diesem Zusammenhang existiert dann notwendigerweise eine übergeordnete Entscheidungsinstanz (so genannten "Voter" oder "Arbiter"), die darüber wacht und entscheidet, welche der kritischen Komponenten noch korrekt arbeiten. Bei dieser Entscheidungsinstanz kann es sich beispielsweise um den Piloten selbst handeln, der beispielsweise bei Abweichungen zwischen den Angaben verschiedener Instrumente nach den Kriterien "Mehrheit" und "Plausibilität" entscheidet und gegebenenfalls Komponenten abschaltet oder ignoriert. Die Entscheidungsinstanz kann jedoch auch in Form einer elektronischen Einheit ausgeführt sein, die den Output (die Ausgangssignale) der redundanten Komponenten vergleicht und entsprechend nach dem Mehrheitsprinzip entscheidet.

Ein elektronischer "Voter" ist aber selbst wieder ein so genannter "single point of failure", weil er bestimmungsgemäß in der Lage sein muss, den Output von bestimmten Komponenten zu ignorieren oder zu überstimmen. Daher kann es bei einem Fehlverhalten des "Voters" geschehen, dass korrekte Steuerimpulse unterdrückt und stattdessen fehlerhafte Steuerimpulse weitergeleitet werden. Außerdem kann es vorkommen, dass der "Voter" selbst fehlerhafte Impulse erzeugt, was die Sicherheit des Flugverhaltens gefährden kann.

Selbst bei dreifacher Redundanz der einzelnen Regelungskomponenten und einem theoretisch als unfehlbar angenommenen "Voter" könnte ein Multicopter schon beim Ausfall von zwei Regelungskomponenten abstürzen. Daher ergäben sich bei einer solchen Lösung extrem hohe Anforderungen an die Zuverlässigkeit der beteiligten Komponenten, was einen entsprechend erhöhten Fertigungs-, Wartungs- und Kostenaufwand bedeuten würde.

Aufgabe der vorliegenden Erfindung ist es, ein Verfahren und ein System für eine ausfallsichere und möglichst zuverlässige elektronische Lageregelung, Steuerung und Bedienung eines solchen Multicopters anzugeben.

Diese Aufgabe wird erfindungsgemäß gelöst durch ein Verfahren gemäß Anspruch 1, durch ein System gemäß Anspruch 21 und durch ein Fluggerät gemäß Anspruch 40. Vorteilhafte Weiterentwicklungen sind jeweils Gegenstand von Unteransprüchen.

Zur Lösung der weiter oben genannten Aufgabe und zur Vermeidung der vorstehend erörterten Problematik wird bei einem Verfahren der weiter oben genannten Art im Rahmen der vorliegenden Erfindung vorgeschlagen, dass die Rotoren über ein ausfallsicheres Netzwerk miteinander datentechnisch verbunden sind und ihren jeweiligen Betriebszustand, insbesondere ihre Rotordrehzahl, in dem Netzwerk kommunizieren; in dem Netzwerk eine erste Mehrzahl an redundanten Sensoren enthalten sind, die steuerungsrelevante (Sensor-)Daten ermitteln und in dem Netzwerk bereitstellen, insbesondere Neigung, Beschleunigung, Drehrate und/oder Position in allen drei Raumachsen des Multicopters; weiterhin in dem Netzwerk eine zweite Mehrzahl an Reglern enthalten sind, die autonom und dezentral anhand der Sensordaten, und vorzugsweise außerdem anhand der Rotor-Betriebszustände, jeweils ein Regelsignal für jeweils wenigstens einen Rotor bestimmen und in dem Netzwerk bereitstellen; die Rotoren mittels der Regelsignale so geregelt werden, dass ein Flugverhalten des Multicopters im Wesentlichen der Vorgabe durch den Piloten-Steuerbefehl entspricht. Dabei braucht der Piloten-Steuerbefehl nicht von einem menschlichen Piloten zu stammen, sondern kann auch automatisch generiert werden (z.B. durch Autopilot oder dgl.).

Entsprechend ist bei einem Steuerungssystem der eingangs genannten Art im Rahmen der vorliegenden Erfindung vorgesehen, dass die Rotoren über ein ausfallsicheres Netzwerk miteinander datentechnisch verbunden und dazu ausgebildet sind, ihren jeweiligen Betriebszustand, insbesondere ihre Rotordrehzahl, in dem Netzwerk zu kommunizieren; in dem Netzwerk eine erste Mehrzahl an redundanten Sensoren enthalten sind, die dazu ausgebildet sind, steuerungsrelevante Daten zu ermitteln und in dem Netzwerk bereitzustellen, insbesondere Neigung, Beschleunigung, Drehrate und/oder Position in allen drei Raumachsen des Multicopters; weiterhin in dem Netzwerk eine zweite Mehrzahl an Reglern enthalten sind, die dazu ausgebildet sind, autonom und dezentral anhand der Sensordaten, und vorzugsweise außerdem anhand der Rotor-Betriebszustände, jeweils ein Regelsignal für jeweils wenigstens einen Rotor zu bestimmen und in dem Netzwerk bereitzustellen; wobei die Rotoren mittels der Regelsignale so regelbar sind, dass ein Flugverhalten des Multicopters im Wesentlichen einer Vorgabe durch den Piloten-Steuerbefehl entspricht. Dabei braucht der Piloten-Steuerbefehl nicht von einem menschlichen Piloten zu stammen, sondern kann auch automatisch generiert werden (z.B. durch Autopilot oder dgl.).

Ein erfindungsgemäßes Fluggerät zeichnet sich dementsprechend dadurch aus, dass es über ein erfindungsgemäßes Steuerungssystem verfügt, welches vorzugsweise dazu ausgebildet ist, ein erfindungsgemäßes Verfahren auszuführen.

Ein stabiles Flugverhalten wird im Rahmen der vorliegenden Erfindung vorzugsweise erreicht durch einen Regelkreis, der Sensoren, einen Regelalgorithmus und Aktoren umfasst. Der Regelalgorithmus wird auf wenigstens einem entsprechend eingerichteten Regler ausgeführt. Die Sensoren liefern Ist-Daten, die durch den Regelalgorithmus verarbeitet werden und dem Regler dazu dienen, die Aktoren entsprechend anzusteuern. Die Sensoren messen z. B. Neigung, Beschleunigung, Drehrate und Position in allen drei (Raum-)Achsen. Als Aktoren dienen die Elektromotoren der Rotoren, wobei es sich vorzugsweise um bürstenlose Gleitstrommotoren handelt. Jeder der Motoren kann einzeln und unabhängig von den anderen in seiner Drehzahl regelbar sein. Der Regelalgorithmus wird - wie bereits erwähnt - auf einem oder mehreren Prozessoren ausgeführt, welche die bereits angesprochenen Regler bilden oder Bestandteil dieser Regler sind. Vorzugsweise kommt je Aktor ein solcher Prozessor / Regler zum Einsatz.

Die im Rahmen der vorliegenden Erfindung vorgeschlagene neue Lösung kommt dementsprechend vollständig ohne zentrale Einheiten aus. Stattdessen verwendet sie eine verteilte Architektur, die aus einer Vielzahl von verteilten Sensoren, Reglern und Aktoren besteht. Die vorstehend genannten Komponenten sind durch ein ausfallsicheres Netzwerk miteinander verbunden, welches Netzwerk vorzugsweise hochgradig redundant ausgeführt ist. Im Zuge einer entsprechenden Weiterbildung der Erfindung kann auf jedem Regler bzw. Netzknoten der gleiche (Regel-)Algorithmus ablaufen, und alle wichtigen Entscheidungen werden dezentral getroffen. Auf diese Weise kann der Ausfall einer Anzahl von Sensoren, Reglern und/oder Aktoren vom Gesamtsystem ausgeglichen und entsprechend toleriert werden. Es existiert kein "Voter", abgesehen von der physikalischen Realität, d. h. der Schwerkraft und der Trägheit.

Dies lässt sich durch folgendes Beispiel exemplarisch und ohne Beschränkung verdeutlichen: Solange die Mehrzahl der Rotoren Auftrieb erzeugt, ist ein fehlerhafter Rotor, der mit zu niedriger Drehzahl dreht, nicht in der Lage, das Gesamtsystem zu stören und die Flugsicherheit des Multicopters zu gefährden. Der fehlende Schub wird gemäß den vorstehenden Ausführungen entsprechend durch die anderen Rotoren kompensiert.

Nachfolgend seien einige besonders vorteilhafte Weiterbildungen des erfindungsgemäßen Grundkonzepts explizit angesprochen:
Vorteilhafterweise umfasst das vorgeschlagene System im Zuge einer entsprechenden Weiterbildung viele, d. h. deutlich mehr als drei Regler, vorzugsweise jeweils einen Regler pro Aktor.

Im Zuge einer anderen Weiterbildung umfasst das System auch "viele" redundante Sensoren und/oder "viele" redundante Aktoren, beispielsweise 18 Elektromotoren und entsprechend viele Propeller.

Wie bereits angesprochen wurde, sind die vorstehend genannten Komponenten über ein ausfallsicheres Datennetzwerk datentechnisch miteinander verbunden. Vorzugsweise erfolgt dabei der Datenaustausch via "Datenflutung an alle", so dass insbesondere alle Regler jederzeit über die Zustände der einzelnen Komponenten innerhalb des Netzwerks informiert sind und entsprechend ihre Entscheidungen treffen können, wobei vorzugsweise jeder Regler autonom entscheidet.

Im Zuge einer anderen Weiterbildung umfasst das System "viele" Stromversorger, beispielsweise in Form jeweils eines Akkumulators pro Motor und Regler.

Wieder eine andere Weiterbildung des erfindungsgemäßen Systems oder Verfahrens sieht vor, dass über das Netzwerk der Output aller Sensoren an alle Regler übertragen wird. Weiterhin kann vorgesehen sein, dass jeder Knoten des Netzwerkes (vorzugsweise also jeder Regler) regelmäßig über seinen Gesamtzustand berichtet, wobei insbesondere die Zustandssignale "OK", "ALARM" oder "DEFEKT" in dem Netzwerk übermittelt werden können.

Eine bestimmte Weiterbildung des erfindungsgemäßen Verfahrens sieht insbesondere vor, dass der Output, d. h. die Ausgangssignale der Sensoren verglichen werden. Dies kann vorzugsweise bei jedem der Regler geschehen, welche im Zuge einer bestimmten Ausführungsform der Erfindung Kenntnis vom Output aller Sensoren haben. Die Auswahl des "richtigen" Wertes, d. h. desjenigen Wertes eines betreffenden Sensors, der bei der Ausführung des Regleralgorithmus berücksichtigt wird, kann durch Medianbildung erfolgen, vorzugsweise nicht durch Mittelwertbildung, wodurch Ausreißer, die außerhalb eines bestimmten Wertebereichs liegen, vorzugsweise ignoriert werden.

Des Weiteren kann vorgesehen sein, dass bei starken Abweichungen der Sensorwerte (Ausreißer) eine ALARM-Meldung an den Piloten ausgegeben wird.

Eine besonders vorteilhafte Weiterbildung des erfindungsgemäßen Verfahrens sieht vor, dass die Regler jeweils einen Output (die Stellgröße) für mehrere oder sogar für alle Aktoren berechnen und vorzugsweise auch entsprechende Ausgangssignale an zumindest einen der Aktoren, an allen Aktoren oder auch alle Netzwerkteilnehmer senden.

Des Weiteren kann vorgesehen sein, dass die Regler ihren jeweiligen Output mit dem Output der anderen Regler vergleichen. In Weiterbildung dieses Aspekts kann noch vorgesehen sein, dass für den eigenen Aktor, d. h. denjenigen Aktor, welcher einem Regler physikalisch oder konstruktiv zugeordnet ist, die Auswahl des "richtigen" Wertes (Stellgröße) durch Auswahl des Medians, insbesondere nicht des Mittelwerts, aus eigenem Output und dem Output der anderen Regler erfolgt.

In diesem Zusammenhang kann sogar vorgesehen sein, dass keine paarweise feste Zuordnung von Reglern und Aktoren existiert, sondern dass jeder Aktor via Medianbildung eine betreffende Stellgröße aus dem Output mehrerer Regler auswählt bzw. ermittelt. In diesem Kontext ist es erforderlich, dass der Aktor selbst über entsprechende Intelligenz verfügt, um den vorstehend beschriebenen Vergleich und die Auswahl vornehmen zu können, beispielsweise durch Bereitstellung eines entsprechenden (Miktor-)Prozessors für den oder die Aktoren.

Eine wieder andere Weiterbildung der Erfindung sieht vor, dass bei starken Abweichungen (Ausreißer) der Outputwerte (Stellgrößen) eine ALARM-Meldung ausgegeben wird, insbesondere an den Piloten. Eine solche Meldung kann optisch und/oder akustisch erfolgen.

Neben dem bloßen Ausgeben einer ALARM-Meldung kann optional noch vorgesehen sein, dass durch entsprechende Steuerbefehle innerhalb des Systems der Handlungsspielraum für den Piloten, beispielsweise die Steig- oder Sinkrate, begrenzt wird, sobald eine ALARM-Meldung vorliegt.

Im Zuge einer entsprechenden Weiterbildung des erfindungsgemäßen Systems verfügt dieses über eine "zentrale" Anzeigevorrichtung (Display), welches jedoch vorzugsweise als bloße Datensenke fungiert und wenigstens einfach redundant ausgeführt ist. Dieses zentrale Display ist ebenfalls an das Netzwerk angeschlossen und hat entsprechend Kenntnis über den gesamten Datenverkehr innerhalb des Netzwerks.

Das Display ist bei entsprechender Ausgestaltung in der Lage, durch einen Vergleich der Daten permanent Plausibilitätschecks durchzuführen und bei Eingang von Alarmmeldungen ebenfalls ALARM anzuzeigen. Das Display ist in diesem Zusammenhang hinreichend "intelligent" auszuführen, beispielsweise durch Vorsehen wenigstens eines geeigneten (Mikro-)Prozessors.

Im Rahmen der angesprochenen Plausibilitätschecks kann vorgesehen sein, dass das Display dem Piloten nur bei konsistenter Datenlage, d. h., wenn alle Sensoren, Regler und/oder Aktoren Daten bzw. Statussignale senden, die innerhalb vorgegebener Grenzen mit einem ordnungsgemäßen Flugbetrieb kompatibel sind, "Grün" und somit die Freigabe des Multicopters für den Flugbetrieb signalisiert.

Während des Flugs kann bei entsprechender Weiterbildung vorgesehen sein, dass bei Vorliegen einer Inkonsistenz oder wenigstens einer ALARM-Meldung über das Display eine Aufforderung an den Piloten ergeht, die ihn zum sofortigen Landen auffordert. Wie bereits angesprochen, ist das Display selber nur eine Datensenke, kein "Voter" nach dem Stand der Technik. Dies bedeutet, dass ein Ausfall des Displays selbst grundsätzlich keinerlei Einfluss auf das Gesamtsystem bzw. auf das Flugverhalten des Multicopters hat.

Zur Bedienung des Multicopters sind vorzugsweise Bedienelemente zur Bedienung durch den Piloten vorgesehen. Diese können, wie bereits angesprochen wurde, beispielsweise als Joysticks oder Steuerknüppel, als Schalter und als Displays, insbesondere auch mit Touchscreen-Funktion, ausgeführt sein. Vorzugsweise sind sämtliche dieser Bedienelemente mehrfach vorhanden und in sich redundant ausgeführt. Bei einem Joystick bedeutet dies beispielsweise, dass dieser mehrere redundante Sensoren pro Achse aufweist.

Gemäß einer bevorzugten Ausgestaltung der Erfindung geht der Output sämtlicher Bedienelemente an alle Netzwerk-Komponenten und steht dort als möglicherweise zu berücksichtigendes Signal zur Verfügung. Auf diese Weise ist es möglich, sämtliche Bedienvorgaben des Piloten (User Input) innerhalb des Systems dezentral auszuwerten.

Um die Betriebssicherheit des Fluggeräts möglichst weiter zu erhöhen, kann vorgesehen sein, dass ein Start bzw. ein Abheben nur dann möglich ist, wenn eine Mehrzahl, vorzugsweise alle Komponenten des Systems ein ordnungsgemäßes Statussignal ("OK") melden und die gesamte Datenlage konsistent ist, wie weiter oben definiert.

Als typisches Beispiel für den vorstehend beschriebenen Sachverhalt lässt sich auf einen dezentralen Regler Bezug nehmen, der "weiß", dass es zwei redundante Startknöpfe gibt. Der genannte Regler kennt auch den Ladezustand sämtlicher Akkumulatoren sowie den Betriebszustand aller anderen Regler. Es kann dann entsprechend vorgesehen sein, dass der dazugehörige Motor - und damit auch alle anderen Motoren - nur gestartet werden kann, wenn der Regler bzw. der Motor erkennt, dass beide Startknöpfe einen Zustand "Start" melden, alle Regler das Statussignal "OK" senden, alle Akkumulatoren mindestens zu 80 % geladen sind und alle Joystick- und Schalterwerte konsistent sind.

Hinsichtlich speziell der Bedienelemente Joystick/Steuerknüppel und/oder Umschalter, worüber der Pilot den aktiven Joystick auswählen kann, kann folgende Weiterbildung der Erfindung vorgesehen sein: Der genannte Umschalter ist dreifach redundant ausgeführt, und es wird derjenige Joystick ausgewählt, für den mindestens zwei oder sogar alle drei Schalter in ihren Ausgangssignalen übereinstimmen. Von diesem ausgewählten Joystick wird anschließend zu Steuerungs- und Regelungszwecken pro Joystick-Parameter (z. B. links/rechts oder oben/unten) jeweils der Median ausgewählt.

Das Verfahren der Medianbildung zum Auswählen von Werten wird im Rahmen bestimmter Ausgestaltungen der vorliegenden Erfindung aus folgendem Grunde angewendet: Die Medianbildung filtert auf einfache Weise "Ausreißer" und besonders fehlerhafte Werte aus. Bei einer Mittelwertbildung hingegen kann, insbesondere bei einer kleinen Anzahl von Werten, schon ein einzelner Fehler zu einer starken Abweichung des Mittelwerts führen. Beispiel: fünf Werte (1, 1, 2, 1, 200 (falscher Wert)); der Median ist 1, der Mittelwert dagegen 41.

Bei einer "hinreichend großen Anzahl" von Werten (<<100) werden einzelne Ausreißer auch beim Mittelwert "weggeglättet". Zusätzlich oder alternativ ist es auch üblich, beispielsweise das jeweilige Maximum und Minimum zu ignorieren. Im Rahmen der vorliegenden Erfindung handelt es sich jedoch üblicherweise um eine "kleine" Anzahl von Werten, beispielsweise maximal 18 oder sogar nur drei oder fünf. Die Anzahl der Werte pro Entscheidungsfindung kann auch zeitlich variieren, wenn beispielsweise wegen eines Datenverlustes im Netzwerk, was durch die Ermittlung von Prüfsummen (beispielsweise CRC) erkannt werden kann, vorübergehend nur drei anstatt beispielsweise fünf Werte zur Verfügung stehen. Der Median löst dieses Problem auf elegante Weise und ist damit sehr fehlertolerant; zudem ist er dank der kleinen Anzahl an vorhandenen Werten einfach zu berechnen, was ansonsten bei einer großen Wertanzahl einen Nachteil bedeuten würde, da die Werte zu Medianbildung aufsteigend angeordnet, also sortiert werden müssen.

Im Rahmen einer entsprechenden Weiterbildung der Erfindung kann vorgesehen sein, dass bei der Medianbildung die Mediandefinition für kardinal skalierte Messgrößen verwendet wird, nach der bei einer die gerade Anzahl von Werten der Median als das arithmetische Mittel der beiden mittleren Elemente gewählt wird, so dass sich beispielsweise für mittlere Werte 11 und 13 der Wert 12 als Median ergibt.

Der weiter oben angesprochene Joystick oder Steuerknüppel ist in seiner Behandlung besonders kritisch, weil hiervon bei einem typischen Multicopter nur "wenige" existieren, beispielsweise zwei oder maximal drei. Daher sind bevorzugt die Sensoren im Joystick redundant ausgelegt, beispielsweise also drei Sensoren je Achse. Der Joystick selber kommuniziert vorzugsweise alle drei Sensorwerte ins Netzwerk, und die Medianbildung erfolgt bei entsprechender Weiterbildung der Erfindung dezentral, verbunden mit einer bevorzugt automatischen Alarmauslösung bei Abweichung, wie beschrieben.

Zwischen den einzelnen Joysticks kann durch ebenfalls redundante Schalter bzw. Umschalter ausgewählt werden, wie ebenfalls weiter oben bereits beschrieben. Damit sind alle Einzelfehler tolerierbar, nur Doppelfehler können potenziell zu einem Problem führen.

Ansonsten hängt die im Rahmen der Erfindung bei entsprechender Ausgestaltung realisierbare Fehlertoleranz gemäß nachfolgender Tabelle von der Anzahl jeweils verfügbarer (Sensor-) Werte ab:

| | |
|---|---|
| Bei einem Wert | Fehlertoleranz 0 |
| Bei zwei Werten | Fehlertoleranz wie beim Mittelwert |
| Bei drei Werten | Fehlertoleranz 1 |
| Bei vier Werten | Fehlertoleranz 1 oder 2 (je nach Abweichungsrichtung) |
| Bei fünf Werten | Fehlertoleranz 2 oder 3 (je nach Abweichungsrichtung) |
| Bei sieben Werten | Fehlertoleranz mindestens 3 |
| ... | ... |

Die vorstehenden Ausführungen sind im Rahmen der Erfindung nicht auf den nur beispielhaft erwähnten Joystick beschränkt, sondern lassen sich für alle Bedienelemente implementieren, die entsprechend Bedienparameter liefern.

Das im Rahmen der vorliegenden Erfindung als ausfallsicheres Netzwerk bezeichnete Netzwerk kann nach entsprechender Weiterbildung der Erfindung mehrfach redundant ausgeführt sein.

Grundsätzlich bieten sich für die praktische Ausgestaltung des Netzwerks mindestens drei unterschiedliche Lösungen an: Beispielsweise kann das Netzwerk mehrere parallele Busse umfassen, z. B. drei CAN-Busse. Alternativ können mehrere, redundant ausgeführte Netze vorhanden sein, beispielsweise drei Ethernet-Netzwerke mit je einem Umschalter oder Switch. Eine bevorzugte Ausgestaltung der Erfindung sieht vor, dass das Netzwerk als vermaschtes Netz (Mesh-Network) ausgeführt ist. Eine mögliche, spezielle Ausgestaltung eines solchen vermaschten Netzwerks ist ein zweidimensionaler Torus, der über keinerlei zentrales Element (in Form eines Switches oder dergleichen) verfügt. Bei einem 2D-Torus sind die einzelnen Netzwerkknoten (gedanklich) in Form eines Arrays mit Zeilen und Spalten angeordnet, wobei die Knoten in jeder Zeile bzw. Spalte von Nachbar zu Nachbar miteinander verbunden sind. Der letzte Knoten in jeder Zeile bzw. Spalte ist dann wiederum mit dem ersten Knoten der betreffenden Zeile/Spalte verbunden.

Beispielsweise lassen sich auf diese Weise 25 Knoten in einem Raster mit fünf Spalten und fünf Zeilen anordnen, wobei im Betrieb quasi beliebig viele, davon maximal vier Knoten in derselben Zeile oder Spalte ausfallen können, ohne dass die Kommunikation innerhalb des Netzwerks unterbrochen wird.

Im Zuge einer entsprechenden Ausgestaltung des Netzwerks weist jeder Netzknoten vier Anschlüsse zu Nachbarknoten auf. Im Rahmen einer wieder anderen Weiterbildung der Erfindung kann hiervon ausgehend vorgesehen sein, dass von den genannten vier Anschlüssen zwei nur für Eingangssignale (Input) und zwei nur für Ausgangssignale (Output) verwendet werden, um das Netzwerk in einfacher Weise per optischer oder elektrischer Übertragung implementieren zu können, welche dann entsprechend nur unidirektionale Verbindungen vorsieht.

Eine andere bevorzugte Weiterbildung der Erfindung sieht vor, dass innerhalb des Netzwerks nur Daten bzw. zu Datenpaketen zusammengefasste Daten weitergeleitet werden, deren so genannter Hopcount (insbesondere entsprechend der Anzahl bereits erfolgter Weiterleitungen eines Datenpakets) einen vorgegebenen Schwellwert noch nicht überschritten hat, damit Datenpakete nicht endlos lange innerhalb des Netzes kreisen. Zusätzlich oder alternativ kann auch vorgesehen sein, dass solche Daten oder Datenpakete, die von einem aktuell weiterleitenden Knoten stammen, von diesem Knoten nicht mehr weitergeleitet werden. In diesem Zusammenhang kann vorgesehen sein, dass jedem Datenpaket eine Liste der bereits besuchten Knoten beigefügt ist, so dass ein Empfänger, welcher bereits in der genannten Liste enthalten ist, das betreffende Datenpaket nicht weitersendet.

Eine andere Weiterbildung der Erfindung sieht vor, dass pro Absender (Netzwerkknoten) eine Ratenbegrenzung implementiert wird, um zu vermeiden, dass das Netzwerk durch einen besonders aktiven Netzwerkknoten überlastet wird.

In diesem Zusammenhang kann vorgesehen sein, dass sich die (unmittelbaren) Nachbarn des genannten aktiven Knotens Zeitpunkt und/oder Anzahl der letzten n Datenpakete merken, wobei n eine vorgegebene natürliche Zahl ist. Wird hierbei ein vorgegebenes Limit überschritten, werden die betreffenden Daten bzw. Datenpakete verworfen und ein ALARM-Zustand angezeigt.

Im Zuge einer anderen Weiterbildung der Erfindung kann auch vorgesehen sein, dass bestimmte Knoten, das heißt einige oder auch alle innerhalb des Netzwerks als Information-Sammelstellen ("Datenbroker") fungieren. Auf diese Weise lässt sich implementieren, dass nicht alle Datenpakete sofort weitergeleitet werden, sondern dass der betreffende Knoten zusammengehörige Daten, wie beispielsweise Sensorwerte, in einer Tabelle sammelt und diese in einem vorzugsweise regelmäßigen Takt weiterleitet. Dies hat den besonderen Vorteil, dass dann innerhalb des Netzwerkes zahlenmäßig weniger Datenpakete weitergeleitet werden müssen.

Alternativ kann vorgesehen sein, dass an dem betreffenden Knoten eingehende Daten sofort weitergeleitet werden, wenn sie aktueller sind, als bereits in der Tabelle vorhandene Daten. Dies lässt sich z.B. an einem entsprechenden Zeitstempel des Datenerzeugers erkennen.

Eine im Rahmen der vorliegenden Erfindung besonders vorteilhafte Implementierung sieht vor, dass das System bzw. Fluggerät über speziell 18 Rotoren verfügt, wobei jeder Rotor mit einem eigenen Elektromotor, eigenem Akkumulator und eigener elektronischer Ansteuerung ausgestattet ist. Hierbei drehen neun Rotoren im Uhrzeigersinn, während weitere neun Rotoren gegen den Uhrzeigersinn drehen. Das genannte System verfolgt weiterhin über 18 Regeleinheiten (Regler), die jeweils mit eigenen Sensoren für die entscheidenden Flugparametern ausgestattet sind. Als Bedienelemente sind insbesondere dreifach redundante Joysticks mit den genannten Umschaltern vorgesehen. Weiterhin verfügt das exemplarische System bzw. Fluggerät über ein zweifach redundantes zentrales Display, und das Netzwerk ist nach Art eines 2D-Torus mit optischer Übertragung ausgestattet, welche alle Komponenten miteinander verbindet.

Auf diese Weise lässt sich insbesondere bei einem Fluggerät gemäß DE 20 2012 001 750 U1, auf deren Offenbarungsgehalt insbesondere betreffend die mechanisch-konstruktive Ausgestaltung eines Multicopters ansonsten Bezug genommen wird, ein besonders sicherer und zuverlässiger Flugbetrieb gewährleisten.

Weitere vorteilhafte Ausgestaltungen der Erfindung ergeben sich aus den Ansprüchen, insbesondere den Unteransprüchen, so wie aus der nachfolgenden Beschreibung von Ausführungsbeispielen anhand der Zeichnung.
- Figur 1: zeigt schematisch einen Regler mit Motorcontroller, Motor und Propeller;
- Figur 2: zeigt schematisch die Elemente aus Figur 1, wobei Regler und Motorcontroller getrennt an das Netzwerk angeschlossen sind;
- Figur 3: zeigt schematisch den Detailaufbau des Motorcontrollers beispielsweise aus Figur 1;
- Figur 4: zeigt schematisch den Aufbau ein an das Netzwerk angeschlossene Sensoreinheit;
- Figur 5: zeigt schematisch den Detailaufbau eines Reglers;
- Figur 6: zeigt schematisch die Netzwerkschnittstellen bei einem an das Netzwerk angeschlossenen Regler bzw. Mikrocontroller;
- Figur 7: zeigt schematisch den Aufbau einer Bedieneinheit mit Display;
- Figur 8: zeigt schematisch den Aufbau einer Bedieneinheit ohne Display;
- Figur 9: zeigt schematisch den Aufbau des Netzwerks in Form eines 2D-Torus bei einem Multicopter mit 16 Rotoren und 16 Reglern;
- Figur 10: zeigt ein Netzwerk analog Figur 9, jedoch für einen Multicopter mit zwölf Rotoren und fünf Reglern;
- Figur 11: zeigt wesentliche Elemente eines Regelalgorithmus für einen Multicopter in Form eines Ablaufdiagramms;
- Figur 12: zeigt die wesentlichen Elemente eines Regelalgorithmus für einen Mutlicopter im Falle einer verteilten Realisierung;
- Figur 13: zeigt schematisch ein Beispiel für Medianbildung in einer Untermenge von Sensoren und Reglern; und
- Figur 14: zeigt anhand einer Tabelle die Fehlertoleranz bei der Medianbildung.

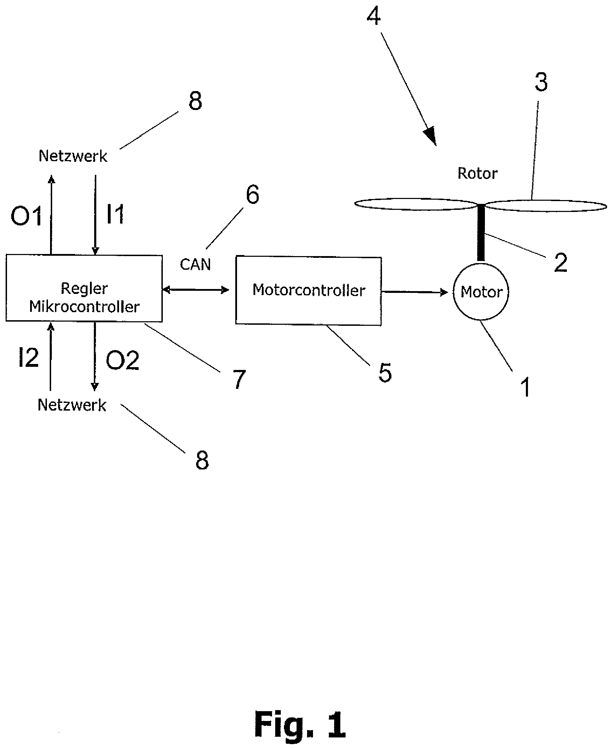

Figur 1 zeigt schematisch einen Regler mit Motorcontroller für den Einsatz in einem erfindungsgemäßen Steuersystem für einen Multicopter, wobei letzterer vorliegend nicht explizit dargestellt ist. Für mögliche konkrete physikalischmechanische Ausgestaltungen eines Multicopters wird beispielsweise auf die bereits mehrfach erwähnte DE 20 2012 001 750 U1 verwiesen, insbesondere was die Anordnung der Propeller, die Ausgestaltung des Tragsystems, der Pilotenkanzel und dergleichen betrifft.

Vorliegend ist Bezugszeichen 1 exemplarisch ein Elektromotor in Form eines bürstenlosen DC-Motors gezeigt, auf dessen Welle (Motorachse) 2 ein Propeller 3 montiert ist. Nach dem Sprachgebrauch der vorliegenden Anmeldung bilden Motor 1 (mit Welle 2) und Propeller 3 einen Rotor 4.

Ein Multicopter weist entsprechend mehrere derartige Rotoren 4 auf, wobei die Rotoren 4 bzw. die Propeller 3 einen festen Anstellwinkel aufweisen und nicht verstellbar sind. Hierauf wurde im einleitenden Teil der Beschreibung detailliert hingewiesen. Zum Steuern des Multicopters werden lediglich die betreffenden Motordrehzahlen der Motoren 1 verändert, worauf ebenfalls weiter oben bereits hingewiesen wurde.

Gemäß Figur 1 ist der Motor 1 mit einem Motorcontroller 5 verbunden, welcher Motorcontroller 5 den Motor 1 ansteuert. Die entsprechenden Ansteuerungsdaten (Stellgrößen) empfängt der Motorcontroller 5 über eine Busverbindung 6, vorliegend einen CAN-Bus, von einem Regler 7 in Form eines Mikrocontrollers. Der Regler 7 ist an ein Netzwerk 8 angeschlossen, was in Figur 1 durch entsprechende Eingänge I1, I2 und Ausgänge O1, O2 symbolisiert ist. Der Regler 7 fungiert entsprechend als Netzwerknoten und weist zwei Eingänge I1, I2 und zwei Ausgänge O1, O2 auf. Auf die Ausgestaltung des Netzwerks 8 wird weiter unten noch genauer eingegangen.

Wie man bereits aus Figur 1 entnimmt, ist das Netzwerk 8 als Netzwerk für unidirektionale Übertragungen ausgelegt, d. h. jeder Netzwerkanschluss des Reglers 7 fungiert entweder als Eingang oder als Ausgang.

Der Regler (oder die Regeleinheit) 7 ist - wie angesprochen - als Mikrocontroller ausgeführt, der entsprechend über eine Prozessoreinheit (CPU) und entsprechende Speichereinheiten (RAM) und (ROM) verfügt, welche in Figur 1 nicht explizit dargestellt und dem Fachmann als solche bekannt sind. Der Regler 7 kann auf diese Weise dazu ausgebildet sein - insbesondere programmgesteuert -, bestimmte Regelalgorithmen zum Ansteuern der Motorcontroller 5 auszuführen, um entsprechend auf den Motor 1 und damit auf die Motordrehzahl bzw. die Drehzahl des Propellers 3 Einfluss zu nehmen, um den Multicopter in der beschriebenen Art und Weise zu steuern.

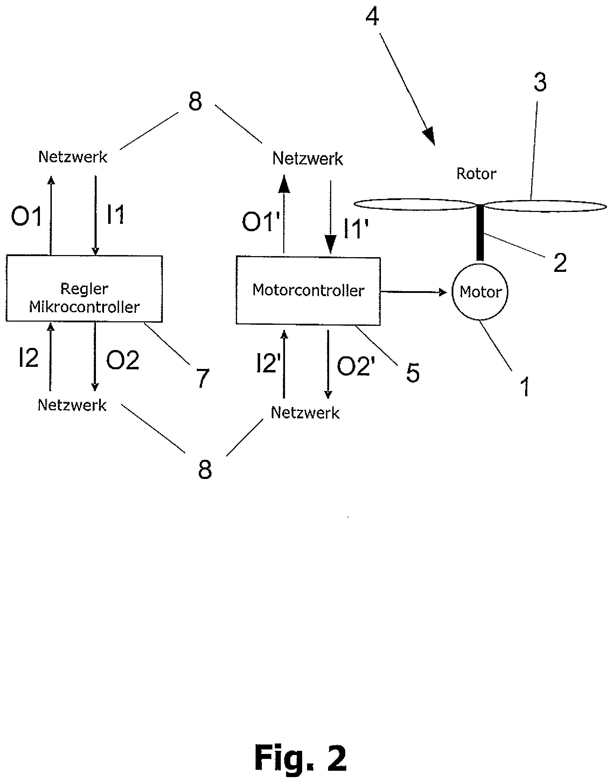

Figur 2 zeigt eine alternative Anordnung der Elemente aus Figur 1, wobei hier und im Folgenden für gleiche oder gleichwirkende Elemente jeweils gleiche Bezugszeichen verwendet werden.

Gemäß Figur 2 sind Regler 7 in dem Motorcontroller 5 getrennt voneinander angeordnet und jeweils separat an das Netzwerk 8 angeschlossen. Entsprechend weist der Motorcontroller 5 eigene Eingänge I1' I2' und eigene Ausgänge O1 O2' auf.

Der Motorcontroller 5 gemäß Figur 2 erhält also die ihn betreffenden Stellsignale anders als in Figur 1 nicht direkt von dem Regler 7 über eine eigene Busverbindung, sondern aus dem Netzwerk 8 von dem dargestellten Regler 7 oder von einem anderen Regler innerhalb des Netzwerks 8, worauf bereits hingewiesen wurde.

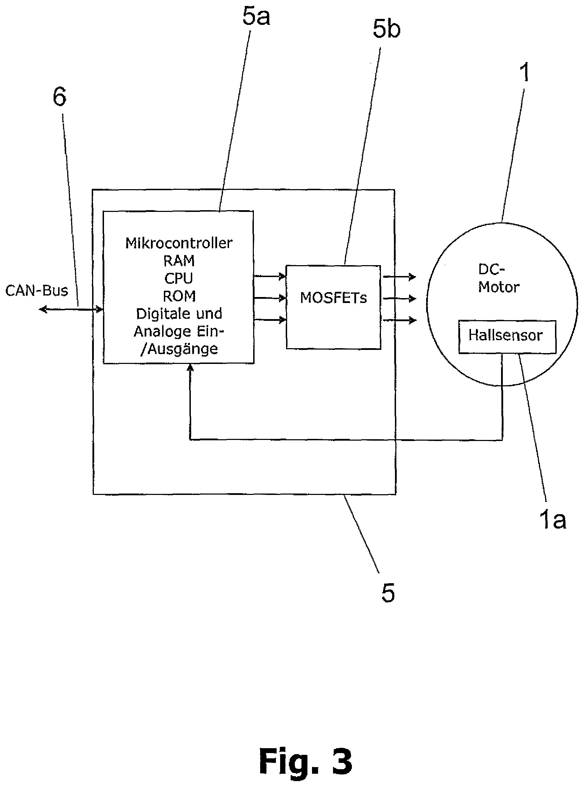

In Figur 3 ist der exemplarische Aufbau eines Motorcontrollers 5 nochmals im Detail dargestellt.

Der Motor 1 ist wiederum als bürstenloser Gleichstrommotor ausgeführt und umfasst gemäß Figur 3 einen Sensor, speziell Hall-Sensor 1a, zur Bereitstellung von Drehzahlinformationen. Der Hall-Sensor 1a ist mit einem in dem Motorcontroller 5 enthaltenen Mikrocontroller 5a verbunden, welcher Mikrocontroller 5a weiterhin über eine CPU, RAM und ROM sowie über digitale und analoge Ein-/Ausgänge verfügt, was dem Fachmann an sich bekannt ist. Außerdem verfügt der Mikrocontroller 5a über eine CAN-Bus-Schnittstelle (vgl. Figur 1). Wie der Fachmann erkennt, kann der Motorcontroller 5 in Figur 3 auch abweichend für eine Verwendung gemäß Figur 2 ausgebildet sein und die hierfür erforderlichen Schnittstellen aufweisen.

Weiterhin umfasst der Motorcontroller 5 noch Transistoren 5b in Form von MOSFETs, die mit entsprechenden Steuerausgängen des Mikrocontrollers 5a verbunden sind und ihrerseits zur Ansteuerung des Motors 1 dienen, um dessen Drehzahl zu beeinflussen.

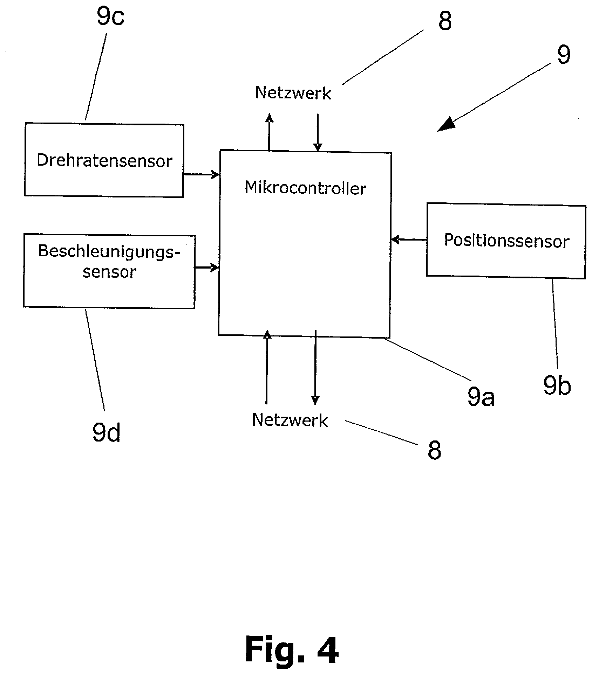

Figur 4 zeigt detailliert den Aufbau einer Sensoreinheit für ein erfindungsgemäßes Steuersystem eines Multicopters. Die Sensoreinheit ist in Figur 4 insgesamt mit dem Bezugszeichen 9 bezeichnet. Sie umfasst einen in das Netzwerk 8 eingebundenen Mikrocontroller 9a an sich bekannter Bauart mit CPU, RAM und ROM sowie den erforderlichen Netzwerkschnittstellen, die in Figur 4 nicht explizit bezeichnet sind. Weiterhin umfasst die Sensoreinheit 9 exemplarisch drei Sensoren, nämlich einen Positionssensor 9b, einen Drehratensensor 9c sowie einen Beschleunigungssensor 9d. Die Verbindung von bzw. zu den Sensoren 9b, 9c, 9d erfolgt beispielsweise über I2C, d. h. einen speziellen seriellen Datenbus, der hauptsächlich geräteintern für die Kommunikation zwischen verschiedenen Schaltungsteilen benutzt wird, beispielsweise zwischen einem Controller und peripheren integrierten Schaltkreisen. Die Sensoren 9b - d liefern Daten in drei Raumrichtungen (x/y/z-Achse) bezüglich Drehrate (Sensor 9c), Beschleunigung (9d) und Position (Sensor 9b), beispielsweise über GPS oder magnetisch nach Art eines Kompasses.

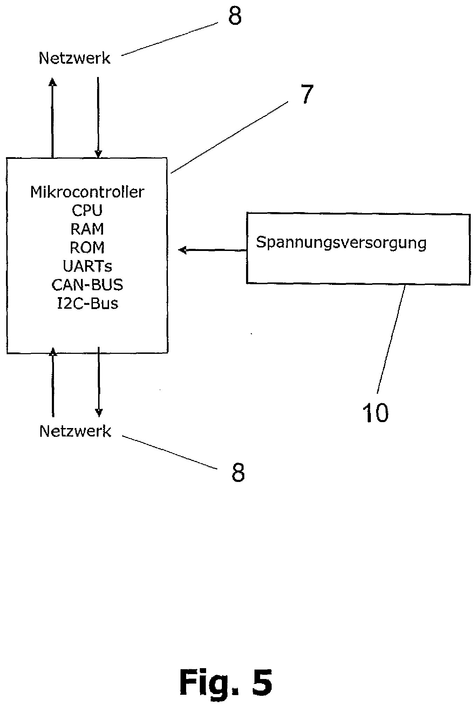

Figur 5 zeigt detailliert den Aufbau eines Reglers für das Steuersystem eines Multicopters, beispielsweise des Reglers 7 gemäß Figur 1 oder Figur 2. Wie bereits angesprochen wurde, umfasst der Regler 7 einen Mikrocontroller mit CPU, RAM und ROM. Darüber hinaus verfügt der Regler 7 bzw. der Mikrocontroller noch über digitale serielle Schnittstellen, die über elektronische Schaltungen in Form von UART (Universal Asynchronous Receiver Transmitter) realisiert sein können. Hierzu kommt der bereits angesprochene CAN-Bus bzw. ein IC2-Bus, insbesondere für eine Kommunikation mit Sensoreinheiten 9 gemäß Figur 4.

Weiterhin dargestellt ist in Figur 5 bei Bezugszeichen 10 eine Spannungsversorgung für den Regler 7, die vorzugsweise in Form eines Akkumulators ausgeführt ist. Vorteilhafterweise ist für jede Anordnung aus Regler 7, Motorcontroller 5 und Motor 1 eine eigene Strom- bzw. Spannungsversorgung 10 vorgesehen.

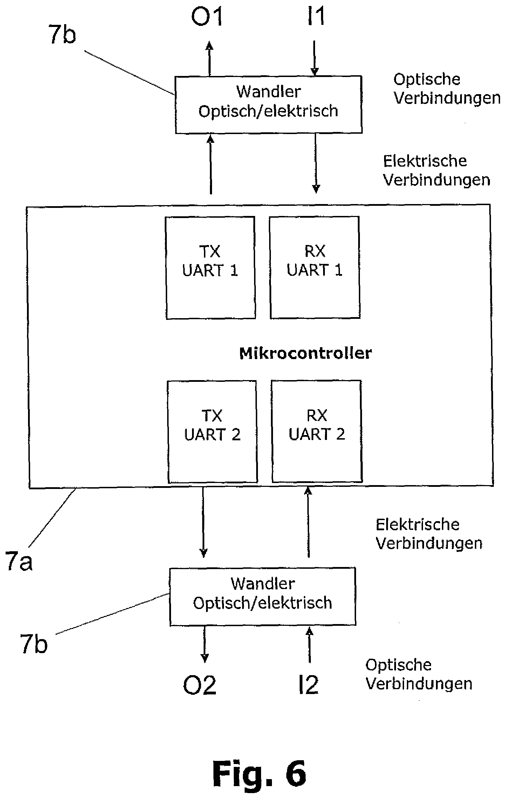

Figur 6 geht nochmals genauer auf die bereits angesprochenen Netzwerkschnittstellen bei einem Mikrocontroller ein, beispielsweise dem Mikrocontroller des Reglers 7 gemäß Figur 5.

In Figur 6 ist der angesprochene Mikrocontroller explizit mit dem Bezugszeichen 7a bezeichnet. Er umfasst die bereits erwähnte UART-Schaltungen, wobei hier zwischen Senden (TX) und Empfangen (RX) unterschieden wird. Dementsprechend sind die genannten Schaltungen mit TX-UART 1/2 und RX-UART 1/2 bezeichnet, jeweils entsprechend den in Figur 1 oder Figur 2 bezeichneten Eingängen /Ausgängen I1, I2 bzw. O1, O2.

Gemäß Figur 6 ist der gezeigte Mikrocontroller 7a speziell für den Anschluss an ein optisches Netzwerk ausgebildet und weist entsprechend im Bereich der Netzwerkschnittstellen jeweils noch optisch-elektrische Wandler 7b auf, um von dem Mikrocontroller 7a erzeugte elektrische Signale in optische Signale umzuwandeln und umgekehrt.

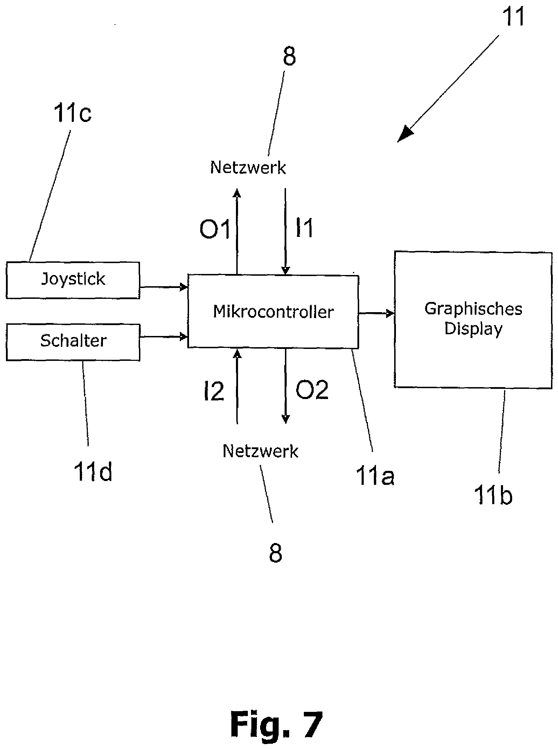

In Figur 7 ist eine Bedieneinheit zur Verwendung in dem Steuersystem eines Multicopters dargestellt, welche Bedieneinheit insgesamt mit den Bezugszeichen 11 bezeichnet ist. Gemäß Figur 7 umfasst die Bedieneinheit 11 einen eigenen Mikrocontroller 11a mit CPU, RAM und ROM und wiederum vier Netzwerkverbindungen I1, I2 bzw. O1, O2. Der Mikrocontroller 11a steht in signaltechnischer Wirkverbindung mit einem grafischen Display 11b, um dieses anzusteuern. Das Display 11b kann auch Bedienfunktionen beinhalten, beispielsweise nach Art eines Touchscreens, fungiert jedoch grundsätzlich lediglich als Datensenke, um beispielsweise einem Piloten einen Betriebszustand des Multicopters zur Anzeige zu bringen.

Weiterhin ist der Mikrocontroller 11b noch mit einem Steuerknüppel (Joystick) 11c und mit einem Schalter 11d signaltechnisch verbunden, so dass er entsprechenden Input von dem Joystick 11c und dem Schalter 11d empfangen kann.

Wie sich bereits bei der Lektüre des einleitenden Teils der Beschreibung ergibt, ist die Bedieneinheit 11 keinesfalls auf die hier gezeigte konkrete Ausgestaltung beschränkt. Insbesondere können an den Mikrocontroller 11a auch mehrere Joysticks 11c und mehrere Schalter 11d angeschlossen sein, um beispielsweise durch entsprechendes Betätigen der Schalter einen aktiven Joystick auszuwählen.

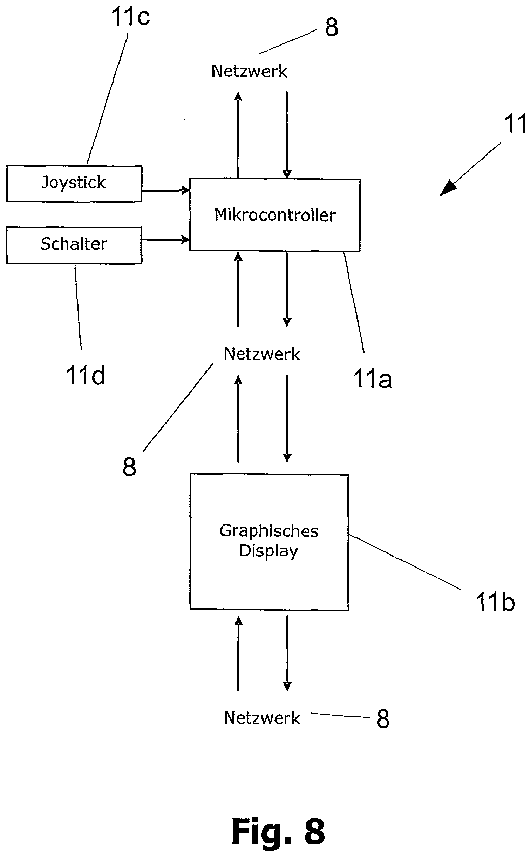

In Figur 8 ist eine alternative Ausgestaltung der Bedieneinheit 11 gezeigt, bei welcher das Display 11b nicht direkt an den Mikrocontroller 11a angeschlossen ist, sondern nur "indirekt" über das Netzwerk 8 mit dem Mikrocontroller 11a in Wirkverbindung steht. Ansonsten sei auf die Erläuterungen zu Figur 7 verwiesen.

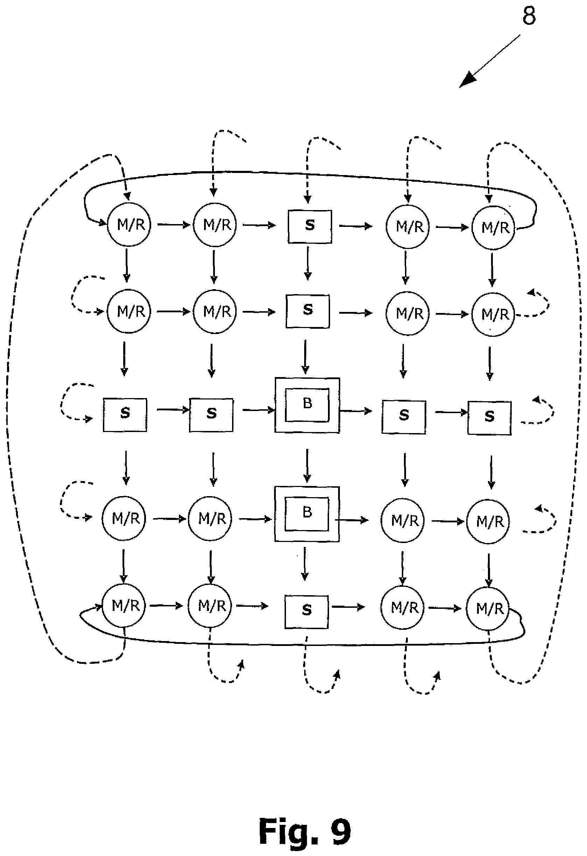

Figur 9 zeigt eine mögliche Konfiguration des Netzwerks 8 und die prinzipielle Anordnung der darin vorhandenen logischen Elemente (Netzwerkknoten) anhand eines Steuersystems für einen Multicopter mit 16 Rotoren und Reglern.

Die Einheiten aus Motoren und Reglern, vergleiche beispielsweise Figur 1, sind in Figur 9 mit "M/R" bezeichnet und brauchen nicht einzeln identifiziert zu werden. Der Buchstabe "S" bezeichnet sieben Sensoreinheiten, der Buchstabe "B" steht für zwei Bedieneinheiten; alle vorstehend genannten Einheiten (M/R, B, S) sind in einem Netzwerk 8 nach Art eines unidirektionalen 2D-Torus vernetzt, wobei jeder der Netzwerkknoten M/R, B, S über zwei Signaleingänge und zwei Signalausgänge verfügt. Die insgesamt 25 Netzwerkknoten sind (gedanklich) in Form einer 5x5-Matrix angeordnet, die entsprechend über fünf Zeilen und fünf Spalten verfügt. Innerhalb jeder Zeile ist jeder Netzwerkknoten von links nach rechts mit seinem jeweils nächsten Nachbarn verbunden, wobei der letzte Knoten einer Zeile mit dem ersten Knoten der betreffenden Zeile verbunden ist. Gleiches gilt entsprechend für jede Spalte, wie in Figur 9 dargestellt. Das entstehende Netzwerk 8 ist aufgrund der vielfältigen und redundanten Signalverbindungen besonders ausfallsicher, worauf bereits hingewiesen wurde.

Bei der Ausgestaltung in Figur 9 sind - wie bereits erwähnt - die Einheiten "M/R" vorzugsweise gemäß der Darstellung in Figur 1 ausgebildet. Die Sensoreinheiten "S" können gemäß der Darstellung in Figur 4 ausgebildet sein. Des Weiteren können die Bedieneinheiten "B" insbesondere gemäß Figur 7 ausgebildet sein. Selbstverständlich ist es jedoch möglich, die eigentliche Bedieneinheit von den Displays zu trennen, vergleiche Figur 8. Auch hinsichtlich der anderen Netzwerkknoten ist die Ausgestaltung gemäß Figur 9 nicht auf eine der Ausgestaltungen gemäß den vorstehend beschriebenen Figuren 1 bis 8 beschränkt.

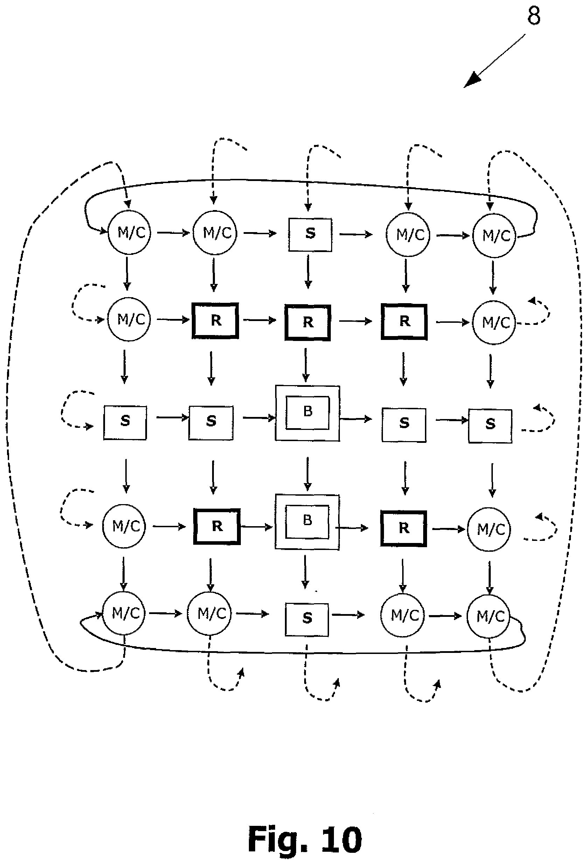

Figur 10 zeigt eine alternative Ausgestaltung des Netzwerks 8, umfassend zwölf Einheiten aus Motoren und zugehörigen Motorcontroller, die in Figur 10 mit "M/C" bezeichnet sind, was beispielsweise der Ausgestaltung im rechten Teil der Figur 2 entsprechen kann. Die Regler sind hiervon getrennt und in Figur 10 mit "R" bezeichnet. Die Anordnung gemäß Figur 10 umfasst fünf derartige Regler R.

Des Weiteren umfasst die Ausgestaltung gemäß Figur 10 noch zwei Bedieneinheiten, die wiederum mit "B" bezeichnet sind, sowie sechs Sensoreinheiten "S". Die Anordnung insgesamt erfolgt wiederum nach Art eines 2D-Torus.

Wie der Fachmann leicht erkennt, ist die vorliegende Erfindung keinesfalls auf die anhand von Figur 9 und Figur 10 nur exemplarisch beschriebenen Ausgestaltungen beschränkt, insbesondere was die Anzahl an Motoren, Reglern, Sensoren und Bedieneinheiten betrifft.

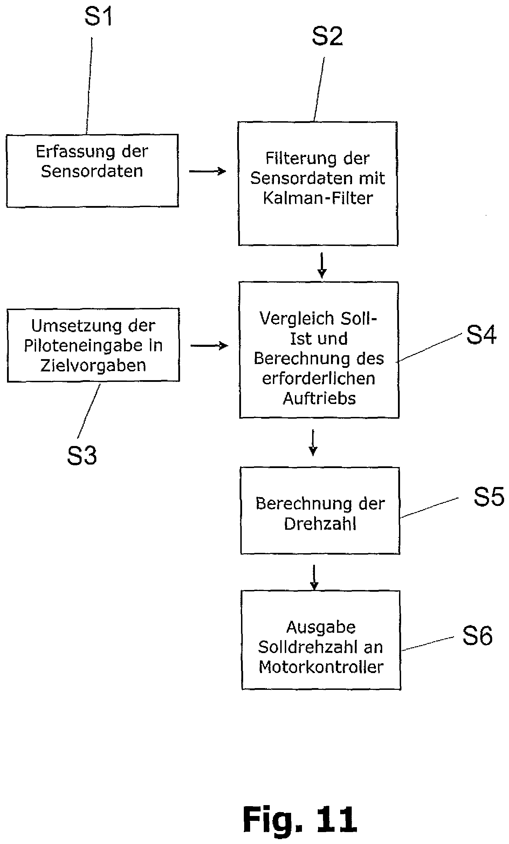

Figur 11 zeigt in Form eines Ablaufsdiagramms wesentliche Elemente eines Regelalgorithmus, wie er vorzugsweise in jedem der Regler eines erfindungsgemäßen Steuersystems ausgeführt wird, vergleiche Bezugszeichen 7 bzw. R in den vorstehend erläuterten Figuren.

Wesentliche Elemente des angesprochenen Regelalgorithmus sind die Erfassung der Sensordaten in Schritt S1, welche Sensordaten anschließend in einem Schritt S2 einer Filterung unterzogen werden, beispielsweise mit dem hier exemplarisch erwähnten Kalman-Filter. Dieses und andere geeignete Filterverfahren sind dem Fachmann bekannt. In einem weiteren Verfahrensschritt S3 erfolgt der Umsetzung der von einem Piloten mittels der Bedienelemente eingegebenen Pilotenvorgaben in entsprechende Zielvorgaben, weiche Zielvorgaben in Schritt S4 im Rahmen eines Soll-Ist-Vergleichs mit den gefilterten Sensordaten aus Schritt S2 verglichen werden. Des Weiteren erfolgt in Schritt S4 eine Berechnung des erforderlichen Auftriebs. Hierin schließt sich in Schritt S5 die Berechnung der Drehzahl für einen zugeordneten Rotor oder - im Rahmen einer entsprechenden Weiterbildung der Erfindung - für mehrere oder alle vorhandenen Rotoren an. Anschließend wird in Schritt S6 die Solldrehzahl nach Art einer Stellgröße an den oder die betreffenden Motorcontroller ausgegeben.

Die angesprochenen Zielvorgaben umfassen insbesondere die gewünschte Fluggeschwindigkeit, die Flughöhe und die Flugrichtung. Die Regelung selbst kann unter Verwendung bekannter Standardverfahren erfolgen, beispielsweise unter Einsatz digitaler PID-Regler.

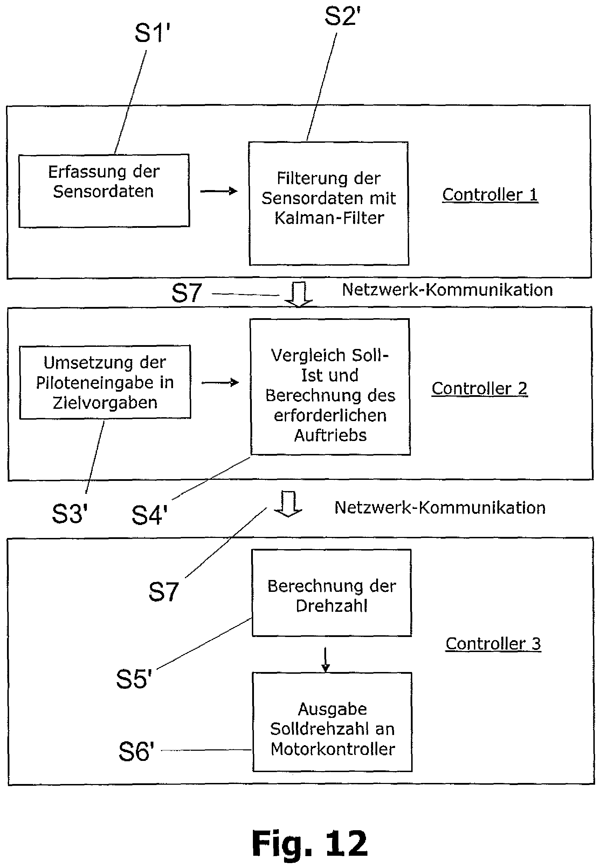

Figur 12 zeigt anhand eines Ablaufdiagramms einen alternativen, verteilten Regelalgorithmus bzw. dessen wesentliche Elemente als Beispiel für eine verteilte Realisierung. Hierbei erfasst ein "Controller 1" in Schritt S1' die Sensordaten und nimmt in Schritt S2' die anhand von Figur 11 erläuterte Filterung vor. Die sich hieraus gefilterten Sensordaten werden bei Bezugszeichen S7 per Netzwerk-Kommunikation an einen "Controller 2" weitergeleitet, der in Schritt S3' bzw. S4' für die bereits beschriebene Umsetzung der Pilotenvorgabe in Zielvorgaben und den Soll-Ist-Vergleich 6 zwecks Berechnung des erforderlichen Auftriebs verantwortlich ist. Die sich hieraus ergebenden Daten werden über eine weitere Netzwerkkommunikation S7 an einen "Controller 3" weitergeleitet, der dann in Schritt S5' die Berechnung der Drehzahl und Schritt S6' die Ausgabe der Solldrehzahl an den bzw. die Motorcontroller vornimmt.

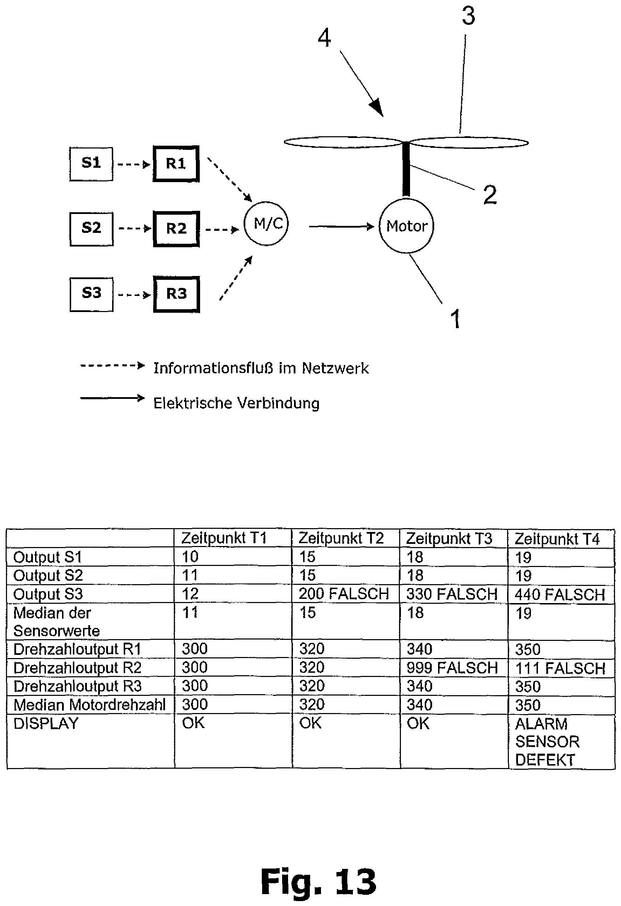

Figur 13 zeigt schematisch die Medianbildung in einer Untermenge von Sensoren und Reglern, wobei im oberen Bereich der Figur 13 drei Sensoren S1, S2, S3 und drei Regler R1, R2, R3 dargestellt sind. Gezeigt ist weiterhin ein Motorcontroller M/C. Die gestrichelten Pfeile bezeichnen nur den Informationsfluss im Netzwerk, nicht notwendigerweise eine direkte signaltechnische Verbindung. Der durchgezogene Pfeil symbolisiert die elektrische Verbindung zwischen Motorcontroller M/C und Motor 1. Der genannte Motor 1 ist wiederum Teil eines Rotors 4 und treibt über eine Welle 2 einen Propeller 3.

Im unteren Teil der Figur 13 ist tabellarisch jeweils ein fiktiver Output der Sensoren S1-S3, der Median der betreffenden Sensorwerte, ein Drehzahloutput der Regler R1-R3, der Median der Motordrehzahl sowie eine Anzeige im Display zu verschiedenen Zeitpunkten T1 bis T4 dargestellt.

Zum Zeitpunkt T1 liefern alle drei Sensoren S1-S3 einen korrekten Wert, der allerdings durch Messungenauigkeit leicht variiert. Die Medianbildung erfolgt dezentral in allen drei Reglern R1-R3 mit dem gleichen Ergebnis, nämlich dem Wert 11. Alle drei Regler R1-R3 berechnen daraus die gleiche Solldrehzahl 300 für den Motor 1. Der Motorcontroller M/C verwendet daraus den Median, ebenfalls 300, und steuert den Motor 1 entsprechend an.

Zum Zeitpunkt T2 ist Sensor S3 defekt und liefert einen falschen Wert (200), der jedoch noch im zulässigen Wertebereich liegt. Durch Medianbildung wird der falsche Wert dennoch ignoriert. Alle drei Regler R1-R3 berechnen 320 als Solldrehzahl, und der Motor 1 wird entsprechend angesteuert.

Zum Zeitpunkt T3 fällt auch noch der Regler R2 aus, beispielsweise wegen eines unbemerkten RAM-Fehlers. Die Medianbildung der Sensorwerte ergibt 18, auch noch im defekten Regler R2. Die Drehzahlberechnung in den Reglern R1 und R3 ergibt übereinstimmend den Wert 340. Im Regler R2 verfälscht der RAM-Fehler den Wert zu 999. Der Motorcontroller M/C bildet als Drehzahlmedian den Wert 340, so dass der Motor 1 dennoch korrekt angesteuert wird.

Das zentrale Display, vgl. beispielsweise Figur 7 oder Figur 8, beobachtet die Sensorwerte und Drehzahlen und prüft sie auf Plausibilität. Kurzfristige Abweichungen werden vorzugsweise ausgefiltert. Sind aber die Werte über einen gewissen Zeitraum inplausibel, das heißt sie weichen beispielsweise für mehr als zwei aufeinanderfolgende Zeitpunkte um mehr als 15% vom Median ab, wird Alarm ausgelöst. Im vorliegenden Beispiel wäre dies zum Zeitpunkt T4 für die Sensorwerte erreicht, und zu einem Zeitpunkt T5 (nicht dargestellt) auch für den Drehzahlwert.

Verwendet wird vorzugweise und im vorliegenden Beispiel die Mediandefinition für kardinal skalierte Messgrößen, nach der bei einer geraden Anzahl von Werten der Median als das arithmetische Mittel der beiden mittleren Elemente berechnet wird. Beispielsweise ergeben die Werte 11 und 13 einen Medianwert von 12.

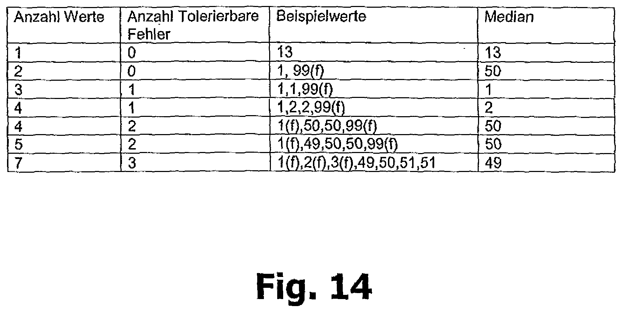

In Figur 14 ist abschließend dargestellt, dass die Medianbildung eine gute Fehlertoleranz auch bei einer sehr kleinen Anzahl von Messwerten liefert, wobei in der Tabelle gemäß Figur 14 fehlerhafte Werte durch (f) gekennzeichnet sind. So sind beispielsweise bei einer Anzahl von sieben Messwerten bereits drei fehlerhafte Werte tolerierbar, wie die letzte Zeile der Tabelle in Figur 14 verdeutlicht.

### Bezugszeichenliste

- 1: Motor
- 2: Welle
- 3: Propeller
- 4: Rotor
- 5: Motorcontroller
- 6: CAN-Bus
- 7: Regler, Regeleinheit
- 7a: Mikrocontroller
- 7b: optisch-elektrischer Wandler
- 8: Netzwerk
- 9: Sensoreinheit
- 9b: Sensor
- 9c: Sensor
- 9d: Sensor
- 10: Spannungsversorgung, Stromversorgung
- 11: Bedieneinheit
- 11a: Mikrocontroller
- 11b: grafisches Display
- 11c: Joystick, Bedienelement
- 11d: Schalter

- M/R: Motor-Regler-Einheit
- M/C: Motorcontroller
- B: Bedieneinheit
- R: Regler
- R1: Regler
- R2: Regler
- R3: Regler
- S: Sensoreinheit
- S1: Sensor
- S2: Sensor
- S3: Sensor
- I1: Eingang
- I2: Eingang
- O1: Ausgang
- O2: Ausgang

## Patentansprüche

1. Verfahren zum Steuern eines Fluggeräts in Form eines Multicopters, welcher mehrere, vorzugsweise in einer gemeinsamen Rotorebene angeordnete, redundante Rotoren (4) aufweist, um einerseits Auftrieb und andererseits durch Neigung der wenigstens einen Rotorebene auch Vortrieb zu erzeugen, wobei Lageregelung und Steuerung des Multicopters durch Veränderungen von Rotordrehzahlen in Abhängigkeit von Piloten-Steuerbefehlen erfolgen, wobei
die Rotoren (4) über ein ausfallsicheres Netzwerk (8), das mehrfach redundant ausgeführt ist, miteinander datentechnisch verbunden sind und ihren jeweiligen Betriebszustand, insbesondere ihre Rotordrehzahl, in dem Netzwerk (8) kommunizieren;
in dem Netzwerk (8) eine zweite Mehrzahl an Reglern (7) enthalten sind, die autonom und dezentral anhand von Sensordaten, und vorzugsweise außerdem anhand der Rotor-Betriebszustände, jeweils ein Regelsignal für jeweils wenigstens einen Rotor (4) bestimmen und in dem Netzwerk (8) bereitstellen;
die Rotoren (4) mittels der Regelsignale so geregelt werden, dass ein Flugverhalten des Multicopters im Wesentlichen der Vorgabe durch den Piloten-Steuerbefehl entspricht,
**dadurch gekennzeichnet, dass**
die Sensordaten in dem Netzwerk (8) von einer ersten Mehrzahl an verteilten, redundanten Sensoreinheiten (9) ermittelt werden, die steuerungsrelevante Daten des Multicopters betreffend Neigung, Beschleunigung, Drehrate und/oder Position in allen drei Raumachsen des Multicopters ermitteln und in dem Netzwerk (8) bereitstellen.

2. Verfahren nach Anspruch 1 , **dadurch gekennzeichnet, dass** die Rotoren (4), Regler (7) und Sensoren (9 b,c,d) mittels einer dritten Mehrzahl an Stromversorgern (10) elektrisch versorgt werden, vorzugsweise einer entsprechenden Mehrzahl an Akkumulatoren.

3. Verfahren nach Anspruch 1 oder 2, **dadurch gekennzeichnet, dass** die zweite Mehrzahl der Anzahl an Rotoren (4) entspricht und/oder dass die dritte Mehrzahl der Anzahl an Rotoren (4) entspricht und/oder dass die zweite Mehrzahl der dritten Mehrzahl entspricht.

4. Verfahren nach mindestens einem der vorhergehenden Ansprüche,
**dadurch gekennzeichnet, dass** ein Datenaustausch zwischen den Rotoren (4) und/oder Reglern (7) und/oder Sensoren (9 b,c,d) mittels Datenverteilung, insbesondere Datenflutung, in dem Netzwerk (8) erfolgt.

5. Verfahren nach mindestens einem der vorhergehenden Ansprüche,
**dadurch gekennzeichnet, dass** Ausgangssignale aller Sensoren (9 b,c,d) an alle Regler (7) übertragen werden.

6. Verfahren nach mindestens einem der vorhergehenden Ansprüche,
**dadurch gekennzeichnet, dass** jeder Netzwerkknoten in Form eines Sensors (9 b,c,d), Reglers (7) oder Rotors (4) in dem Netzwerk regelmäßig ein Statussignal aussendet.

7. Verfahren nach mindestens einem der vorhergehenden Ansprüche,
**dadurch gekennzeichnet, dass** die Ausgangssignale der Sensoren (9 b,c,d) miteinander verglichen werden, vorzugsweise durch die Regler (7), und eine Auswahl eines den Flugzustand des Multicopters beschreibenden Istwerts durch Medianbildung erfolgt, wobei vorzugsweise außerhalb eines definierten Bereichs liegende Sensorwerte ignoriert werden.

8. Verfahren nach mindestens einem der vorhergehenden Ansprüche,
**dadurch gekennzeichnet, dass** die Ausgangssignale der Sensoren (9 b,c,d) miteinander verglichen werden, vorzugsweise durch die Regler (7), und bei Streuung der Sensorwerte über einen definierten Bereich hinaus ein Warnsignal erzeugt und/oder eine Warnmeldung für den Piloten angezeigt wird.

9. Verfahren nach mindestens einem der vorhergehenden Ansprüche,
**dadurch gekennzeichnet, dass** zumindest einige der Regler (7), vorzugsweise alle Regler (7), ein Regelsignal für jeweils mehr als einen Rotor (4) bereitstellen, vorzugweise für jeweils alle Rotoren (4).

10. Verfahren nach mindestens einem der vorhergehenden Ansprüche,
**dadurch gekennzeichnet, dass** die Ausgangssignale der Regler (7) miteinander verglichen werden, vorzugsweise durch die Regler (7) selbst, und bei Streuung der betreffenden Regelsignale oder Stellgrößen über einen definierten Bereich hinaus ein Warnsignal erzeugt und/oder eine Warnmeldung für den Piloten angezeigt wird.

11. Verfahren nach mindestens einem der vorhergehenden Ansprüche,
**dadurch gekennzeichnet, dass** die Ausgangssignale der Regler (7) miteinander verglichen werden, vorzugsweise durch die Regler (7) selbst, und eine Auswahl einer Stellgröße für einen gegebenen Rotor (4) durch Medianbildung erfolgt, wobei vorzugsweise außerhalb eines definierten Bereichs liegende Stellwerte ignoriert werden, wobei höchst vorzugsweise keine feste Zuordnung der Rotoren (4) zu den Reglern (7) existiert.

12. Verfahren nach mindestens einem der vorhergehenden Ansprüche bei Rückbezug auf Anspruch 8 oder Anspruch 10, **dadurch gekennzeichnet, dass** durch das Warnsignal oder ein davon abgeleitetes Signal ein Handlungsspielraum des Piloten, insbesondere eine möglich Steig- oder Sinkrate des Fluggeräts, automatisch begrenzt wird.

13. Verfahren nach mindestens einem der vorhergehenden Ansprüche,
**dadurch gekennzeichnet, dass** dem Piloten ein Flug- oder Betriebszustand des Fluggeräts über ein wenigstens einfach redundant ausgeführtes Display (11b) angezeigt wird, welches Display (11b) alle im Netzwerk (8) kommunizierten Daten nach Art einer Datensenke empfängt und regelmäßig auf Konsistenz überprüft, worauf bei Inkonsistenz und/oder Vorliegen eines Warnsignals gemäß Anspruch 8 oder Anspruch 10 der Pilot durch eine entsprechende Anzeige informiert und vorzugsweise zur Landung aufgefordert wird.

14. Verfahren nach mindestens einem der vorhergehenden Ansprüche,
**dadurch gekennzeichnet, dass** redundante Bedienelemente (11c,d) für Piloten-Steuerbefehle, wie Schalter oder Steuerknüppel, bereitgestellt werden, deren Ausgangssignale an allen im Netzwerk (8) vorhandenen Einheiten, wie Sensoren (9 b,c,d), Regler (7) und/oder Rotoren (4), bereitgestellt werden, wobei eine dezentrale Auswertung der Piloten-Steuerbefehle durch die Regler (7) erfolgt.

15. Verfahren nach mindestens einem der vorhergehenden Ansprüche,
**dadurch gekennzeichnet, dass** ein Start des Fluggeräts nur freigegeben wird, wenn alle im Netzwerk (8) vorhandenen Einheiten, wie Sensoren (9 b,c,d), Regler (7) und/oder Rotoren (4), einen ordnungsgemäßen Betriebszustand melden und/oder die im Netzwerk (8) kommunizierten Daten zueinander konsistent sind, was insbesondere folgende Zustände umfasst:
a) die vorhandenen Startknöpfe oder dergleichen melden einen "Start"-Betätigungszustand; und/oder
b) alle Regler (7) melden einen ordnungsgemäßen Betriebszustand; und/oder
c) alle Stromversorger (10) gemäß Anspruch 2 melden wenigstens einen Mindestladezustand, beispielsweise 80%; und/oder
d) alle Bedienelemente (11c,d) für Piloten-Steuerbefehle, wie Schalter oder Steuerknüppel, liefern konsistente Werte.

16. Verfahren nach mindestens einem der vorhergehenden Ansprüche,
**dadurch gekennzeichnet, dass** zum Auswählen eines aktiven Bedienelements für Piloten-Steuerbefehle, wie eines Steuerknüppels (11c), aus einer Mehrzahl an redundanten Bedienelementen dasjenige Bedienelement als aktives Bedienelement ausgewählt wird, für welches eine Mehrheit an betreffenden Auswahlelementen, vorzugsweise alle, beispielsweise Umschalter (11d), einen entsprechenden Auswahlzustand anzeigen, wobei höchst vorzugsweise für das ausgewählte Bedienelement für jeden bereitgestellten Bedienparameter der Median ausgewählt wird.

17. Verfahren nach mindestens einem der vorhergehenden Ansprüche,
**dadurch gekennzeichnet, dass** in dem Netzwerk (8) nur Daten oder Datenpakete weitergeleitet werden, bei denen ein ständig aktualisierter Weiterleitungszählwert einen vorgegebenen Schwellwert nicht überschritten hat und/oder die nicht von einem aktuell weiterleitenden Netzwerkteilnehmer selbst stammen.

18. Verfahren nach mindestens einem der vorhergehenden Ansprüche, **dadurch gekennzeichnet, dass** in dem Netzwerk (8) eine Ratenbegrenzung pro Absender erfolgt, wobei vorzugsweise die unmittelbaren Nachbarn jedes Netzwerkteilnehmers Absendezeitpunkt und Anzahl der letzten n, n = 1, 2, 3,... , Daten oder Datenpakete dieses Netzwerkteilnehmers protokollieren und bei Erreichen eines Schwellwerts ein Warnsignal erzeugt wird und/oder die betreffenden Daten oder Datenpakete verworfen werden.

19. Verfahren nach mindestens einem der vorhergehenden Ansprüche, **dadurch gekennzeichnet, dass** in dem Netzwerk (8) Datenpakete an Netzwerkknoten gesammelt und zusammengefasst werden, vorzugsweise je nach Zusammengehörigkeit der betreffenden Daten, und anschließend in vorzugsweise regelmäßigen Takt weitergeleitet werden, oder dass an dem betreffenden Knoten eingehende Daten sofort weitergeleitet werden, wenn sie aktueller sind, als bereits in dem Knoten vorhandene Daten.

20. Verfahren nach mindestens einem der vorhergehenden Ansprüche,
**dadurch gekennzeichnet, dass** die Datenübertragung in dem Netzwerk (8) optisch oder elektrisch erfolgt, vorzugsweise unidirektional.

21. Steuerungssystem mit Rotoren für ein Fluggerät in Form eines Multicopters, welcher mehrere, vorzugsweise in einer gemeinsamen Rotorebene angeordnete, redundante Rotoren (4) aufweist, um einerseits Auftrieb und andererseits durch Neigung der wenigstens einen Rotorebene auch Vortrieb zu erzeugen, wobei Lageregelung und Steuerung des Multicopters durch Veränderungen von Rotordrehzahlen in Abhängigkeit von Piloten-Steuerbefehlen erfolgen, wobei
die Rotoren (4) über ein ausfallsicheres Netzwerk (8), das mehrfach redundant ausgeführt ist, miteinander datentechnisch verbunden und dazu ausgebildet sind, ihren jeweiligen Betriebszustand, insbesondere ihre Rotordrehzahl, in dem Netzwerk (8) zu kommunizieren;
in dem Netzwerk (8) eine zweite Mehrzahl an Reglern (7) enthalten sind, die dazu ausgebildet sind, autonom und dezentral anhand von Sensordaten, und vorzugsweise außerdem anhand der Rotor-Betriebszustände, jeweils ein Regelsignal für jeweils wenigstens einen Rotor (4) zu bestimmen und in dem Netzwerk (8) bereitzustellen;
wobei die Rotoren (4) mittels der Regelsignale so regelbar sind, dass ein Flugverhalten des Multicopters im Wesentlichen einer Vorgabe durch den Piloten-Steuerbefehl entspricht;
**dadurch gekennzeichnet, dass**
in dem Netzwerk (8) eine erste Mehrzahl an verteilten, redundanten Sensoreinheiten (9) enthalten sind, die dazu ausgebildet sind, steuerungsrelevante Daten des Multicopters betreffend Neigung, Beschleunigung, Drehrate und/oder Position in allen drei Raumachsen des Multicopters zu ermitteln und als die Sensordaten in dem Netzwerk (8) bereitzustellen; vorzugsweise zur Durchführung des Verfahrens gemäß einem der Ansprüche 1 bis 20.

22. System nach Anspruch 21, **dadurch gekennzeichnet, dass** für elektrische Versorgung der Rotoren (4), Regler (7) und Sensoren (9 b,c,d) eine dritte Mehrzahl an Stromversorgern vorhanden ist, vorzugsweise in Form einer entsprechenden Mehrzahl an Akkumulatoren, wobei vorzugsweise die zweite Mehrzahl der Anzahl an Rotoren (4) entspricht und/oder die dritte Mehrzahl der Anzahl an Rotoren (4) entspricht und/oder die zweite Mehrzahl der dritten Mehrzahl entspricht.

23. System nach Anspruch 21 oder 22, **dadurch gekennzeichnet, dass** das Netzwerk (8) so aufgebaut und eingerichtet ist, dass ein Datenaustausch zwischen den Rotoren (4) und/oder Reglern (7) und/oder Sensoren (9 b,c,d) mittels Datenverteilung, insbesondere Datenflutung in dem Netzwerk (8) erfolgt.

24. System nach mindestens einem der vorhergehenden Ansprüche 21 bis 23, **dadurch gekennzeichnet, dass** das Netzwerk (8) so aufgebaut und eingerichtet ist, dass Ausgangssignale aller Sensoren (9 b,c,d) an alle Regler (7) übertragbar sind.

25. System nach mindestens einem der vorhergehenden Ansprüche 21 bis 24, **dadurch gekennzeichnet, dass** jeder Netzwerkknoten in Form eines Sensors (9 b,c,d), Reglers (7) oder Rotors (4) dazu ausgebildet und eingerichtet ist, in dem Netzwerk (8) regelmäßig ein Statussignal auszusenden.

26. System nach mindestens einem der vorhergehenden Ansprüche 21 bis 25, **dadurch gekennzeichnet, dass** die Regler (7) dazu ausgebildet sind, Ausgangssignale der Sensoren (9 b,c,d) miteinander zu vergleichen, und eine Auswahl eines den Flugzustand des Multicopters beschreibenden Istwerts durch Medianbildung vorzunehmen, wobei vorzugsweise außerhalb eines definierten Bereichs liegende Sensorwerte ignoriert werden.

27. System nach mindestens einem der vorhergehenden Ansprüche 21 bis 26, **dadurch gekennzeichnet, dass** die Regler (7) dazu ausgebildet sind, Ausgangssignale der Sensoren (9 b,c,d) miteinander zu vergleichen, und bei Streuung der Sensorwerte über einen definierten Bereich hinaus ein Warnsignal zu erzeugen und/oder eine Warnmeldung für den Piloten zu veranlassen.

28. System nach mindestens einem der vorhergehenden Ansprüche 21 bis 27, **dadurch gekennzeichnet, dass** zumindest einige der Regler (7), vorzugsweise alle Regler (7), dazu ausgebildet sind, ein Regelsignal für jeweils mehr als einen Rotor (4) bereitstellen, vorzugweise für jeweils alle Rotoren (4).

29. System nach mindestens einem der vorhergehenden Ansprüche 21 bis 28, **dadurch gekennzeichnet, dass** die Regler (7) dazu ausgebildet sind, Ausgangssignale der Regler (7) miteinander zu vergleichen, und bei Streuung der betreffenden Stellgrößen über einen definierten Bereich hinaus ein Warnsignal zu erzeugen und/oder eine Warnmeldung für den Piloten zu veranlassen.

30. System nach mindestens einem der vorhergehenden Ansprüche 21 bis 29, **dadurch gekennzeichnet, dass** die Regler (7) dazu ausgebildet sind, Ausgangssignale der Regler (7) miteinander zu vergleichen, und eine Auswahl einer Stellgröße für einen gegebenen Rotor (4) durch Medianbildung vorzunehmen, wobei vorzugsweise außerhalb eines definierten Bereichs liegende Stellwerte ignoriert werden, wobei höchst vorzugsweise keine feste Zuordnung der Rotoren (4) zu den Reglern (7) existiert.

31. System nach mindestens einem der vorhergehenden Ansprüche 21 bis 30, **gekennzeichnet durch** ein wenigstens einfach redundant ausgeführtes Display (11b), das dazu ausgebildet ist, dem Piloten einen Flug- oder Betriebszustand des Fluggeräts anzuzeigen, welches Display (11b) dafür eingerichtet ist, alle im Netzwerk (8) kommunizierten Daten nach Art einer Datensenke zu empfangen, regelmäßig auf Konsistenz zu überprüfen und bei Inkonsistenz und/oder Vorliegen eines Warnsignals gemäß Anspruch 27 oder Anspruch 29 den Pilot durch eine entsprechende Anzeige zu informieren und vorzugsweise zur Landung aufzufordern.

32. System nach mindestens einem der vorhergehenden Ansprüche 21 bis 31, **gekennzeichnet durch** redundante Bedienelemente (11 c, d) für Piloten-Steuerbefehle, wie Schalter oder Steuerknüppel, deren Ausgangssignale an allen im Netzwerk (8) vorhandenen Einheiten, wie Sensoren (9 b,c,d), Regler (7) und/oder Rotoren (4), bereitgestellt werden, wobei vorzugsweise die Regler (7) dazu ausgebildet sind, eine dezentrale Auswertung der Piloten-Steuerbefehle vorzunehmen.

33. System nach mindestens einem der vorhergehenden Ansprüche 21 bis 32, **dadurch gekennzeichnet, dass** zum Auswählen eines aktiven Bedienelements (11 c) für Piloten-Steuerbefehle, wie eines Steuerknüppels, aus einer Mehrzahl an redundanten Bedienelementen eine Mehrzahl an betreffenden Auswahlelementen (11 d), vorzugsweise alle, beispielsweise Umschalter (11 d), vorgesehen sind, wobei das System dazu ausgebildet ist, dass dasjenige Bedienelement als aktives Bedienelement ausgewählt wird, für welches eine Mehrheit der Auswahlelemente einen entsprechenden Auswahlzustand anzeigen.

34. System nach mindestens einem der vorhergehenden Ansprüche 21 bis 33, **dadurch gekennzeichnet, dass** das Netzwerk (8) so konfiguriert ist, dass nur Daten oder Datenpakete weitergeleitet werden, bei denen ein ständig aktualisierter Weiterleitungszählwert einen vorgegebenen Schwellwert nicht überschritten hat und/oder die nicht von einem aktuell weiterleitenden Netzwerkteilnehmer selbst stammen.

35. System nach mindestens einem der vorhergehenden Ansprüche 21 bis 34, **dadurch gekennzeichnet, dass** das Netzwerk (8) so konfiguriert ist, dass in dem Netzwerk (8) eine Ratenbegrenzung pro Absender erfolgt, wobei vorzugsweise die unmittelbaren Nachbarn jedes Netzwerkteilnehmers dazu eingerichtet sind, Absendezeitpunkt und Anzahl der letzten n, n = 1, 2, 3,..., Daten oder Datenpakete dieses Netzwerkteilnehmers zu protokollieren und bei Erreichen eines Schwellwerts ein Warnsignal zu erzeugen und/oder die betreffenden Daten oder Datenpakete zu verwerfen.

36. System nach mindestens einem der vorhergehenden Ansprüche 21 bis 35, **dadurch gekennzeichnet, dass** das Netzwerk (8) so konfiguriert ist, dass in dem Netzwerk (8) Datenpakete an Netzwerkknoten gesammelt und zusammengefasst werden, vorzugsweise je nach Zusammengehörigkeit der betreffenden Daten, und anschließend in einem vorzugsweise regelmäßigem Takt weitergeleitet werden, oder dass an dem betreffenden Knoten eingehende Daten sofort weitergeleitet werden, wenn sie aktueller sind, als bereits in dem Knoten vorhandene Daten.

37. System nach mindestens einem der vorhergehenden Ansprüche 21 bis 36, **dadurch gekennzeichnet, dass** das Netzwerk (8) zur optischen oder elektrischen Datenübertragung, vorzugsweise unidirektional, ausgebildet ist.

38. System nach mindestens einem der vorhergehenden Ansprüche 21 bis 37, **dadurch gekennzeichnet, dass** das Netzwerk (8) mehrfach redundant ausgebildet ist, vorzugsweise mit mehreren parallelen Bussen, beispielsweise CAN-Busse, oder in Form mehrerer redundanter Netze, beispielsweise mehrfaches Ethernet mit je einem Switch, oder als vermaschtes Netz, beispielsweise zweidimensionaler Torus, ohne zentrales Element, wie beispielsweise Switch.

39. System nach mindestens einem der vorhergehenden Ansprüche 21 bis 38, **dadurch gekennzeichnet, dass** in dem Netzwerk (8) pro Netzknoten jeweils drei oder mehr, vorzugsweise vier, Anschlüsse zu Nachbarknoten vorhanden sind, wobei höchst vorzugsweise eine erste Unterzahl an Anschlüssen, vorzugsweise zwei, als Eingänge (I1, I2) und eine zweite Unterzahl an Anschlüssen, vorzugsweise zwei, als Ausgänge (O1, O2)ausgebildet sind.

40. Fluggerät in Form eines Multicopters, welcher mehrere, vorzugsweise in einer gemeinsamen Rotorebene angeordnete, redundante Rotoren (4), umfassend jeweils wenigstens einen Elektromotor (1) und einen Propeller (3), aufweist, um einerseits Auftrieb und andererseits durch Neigung der wenigstens einen Rotorebene im Raum auch Vortrieb zu erzeugen, wobei Lageregelung und Steuerung des Multicopters durch Veränderungen von Rotordrehzahlen in Abhängigkeit von Piloten-Steuerbefehlen erfolgen,
**dadurch gekennzeichnet, dass**
der Multicopter über ein Steuerungssystem gemäß einem der Ansprüche 21 bis 39 verfügt, welches vorzugsweise dazu ausgebildet ist, ein Verfahren gemäß einem der Ansprüche 1 bis 20 auszuführen.

## Claims

1. Method for controlling an aircraft in the form of a multicopter which has a plurality of redundant rotors (4), preferably arranged in a common rotor plane, in order, on the one hand, to generate lift and, on the other hand, by inclination of the at least one rotor plane, also to generate propulsion, wherein attitude regulation and control of the multicopter are effected by alterations to rotor speeds in dependence upon pilot control commands, the rotors (4) being in data-transmitting connection with one another via a fail-safe network (8), which is implemented with multiple redundancy, and communicating their respective operating states, especially their rotor speeds, in the network (8);
the network (8) contains a second plurality of controllers (7) which, autonomously and decentrally with reference to sensor data, and preferably also with reference to the rotor operating states, each determine a control signal for at least one rotor (4) and make that control signal available in the network (8);
the rotors (4) are controlled by means of the control signals so that a flight characteristic of the multicopter corresponds substantially to what has been specified by the pilot control command,
**characterised in that**
the sensor data in the network (8) are determined by a first plurality of distributed, redundant sensor units (9) which determine control-relevant data of the multicopter relating to inclination, acceleration, yaw rate and/or position in all three spatial axes of the multicopter and make that data available in the network (8).

2. Method according to claim 1, **characterised in that** the rotors (4), controllers (7) and sensors (9 b,c,d) are supplied with electrical power by means of a third plurality of power supply units (10), preferably a corresponding plurality of rechargeable batteries.

3. Method according to claim 1 or 2, **characterised in that** the second plurality corresponds to the number of rotors (4) and/or the third plurality corresponds to the number of rotors (4) and/or the second plurality corresponds to the third plurality.

4. Method according to at least one of the preceding claims, **characterised in that** an exchange of data between the rotors (4) and/or controllers (7) and/or sensors (9 b,c,d) is effected by means of data distribution, especially data flooding, in the network (8).

5. Method according to at least one of the preceding claims, **characterised in that** output signals of all sensors (9 b,c,d) are transmitted to all controllers (7).

6. Method according to at least one of the preceding claims, **characterised in that** each network hub in the form of a sensor (9 b,c,d), controller (7) or rotor (4) regularly emits a status signal in the network.

7. Method according to at least one of the preceding claims, **characterised in that** the output signals of the sensors (9 b,c,d) are compared with one another, preferably by the controllers (7), and a selection of an actual value describing the flight condition of the multicopter is effected by median formation, with sensor values lying outside a defined range preferably being ignored.

8. Method according to at least one of the preceding claims, **characterised in that** the output signals of the sensors (9 b,c,d) are compared with one another, preferably by the controllers (7), and, in the event of the sensor values being scattered beyond a defined range, a warning signal is generated and/or a warning message for the pilot is displayed.

9. Method according to at least one of the preceding claims, **characterised in that** at least some of the controllers (7), preferably all controllers (7), each provide a control signal for more than one rotor (4), preferably for all rotors (4).

10. Method according to at least one of the preceding claims, **characterised in that** the output signals of the controllers (7) are compared with one another, preferably by the controllers (7) themselves, and, in the event of the relevant control signals or controlled variables being scattered beyond a defined range, a warning signal is generated and/or a warning message for the pilot is displayed.

11. Method according to at least one of the preceding claims, **characterised in that** the output signals of the controllers (7) are compared with one another, preferably by the controllers (7) themselves, and a selection of a controlled variable for a given rotor (4) is effected by median formation, with control values lying outside a defined range preferably being ignored, there most preferably being no fixed allocation of the rotors (4) to the controllers (7).

12. Method according to at least one of the preceding claims when appended to claim 8 or claim 10, **characterised in that** the pilot's freedom of action, especially a possible rate of climb or descent of the aircraft, is automatically limited by the warning signal or by a signal derived therefrom.

13. Method according to at least one of the preceding claims, **characterised in that** a flight condition or operating state of the aircraft is displayed to the pilot by means of a display (11b) implemented with at least single redundancy, which display (11b) receives all the data communicated in the network (8) similarly to a data sink and regularly checks that data for consistency, whereupon in the event of inconsistency and/or the presence of a warning signal according to claim 8 or claim 10 the pilot is informed by a corresponding display and preferably requested to land.

14. Method according to at least one of the preceding claims, **characterised in that** redundant operating elements (11 c,d) for pilot control commands, such as switches or joysticks, are provided, the output signals of which are made available at all units present in the network (8), such as sensors (9 b,c,d), controllers (7) and/or rotors (4), with a decentralised assessment of the pilot control commands being effected by the controllers (7).

15. Method according to at least one of the preceding claims, **characterised in that** the aircraft is allowed to start only when all units present in the network (8), such as sensors (9 b,c,d), controllers (7) and/or rotors (4), report a proper operating state and/or the data commun-icated in the network (8) are consistent with one another, which comprises especially the following conditions:
a) any start buttons or the like report a "start" operating state; and/or
b) all controllers (7) report a proper operating state; and/or
c) all power supply units (10) according to claim 2 report at least a minimum charge state, for example 80 %; and/or
d) all operating elements (11 c,d) for pilot control commands, such as switches or joysticks, deliver consistent values.

16. Method according to at least one of the preceding claims, **characterised in that** for selection of an active operating element for pilot control commands, such as a joystick (11c) from a plurality of redundant operating elements there is selected as active operating element that operating element for which a majority, preferably all, of the relevant selection elements, for example change-over switches (11d), indicate a corresponding selection status, it being most preferable to select for the selected operating element the median for each operating parameter provided.

17. Method according to at least one of the preceding claims, **characterised in that** in the network (8) there are forwarded only data or data packets in which a constantly updated forwarding counter value has not exceeded a preset threshold value and/or which do not originate from a currently forwarding network participant itself.

18. Method according to at least one of the preceding claims, **characterised in that** rate limitation is effected for each sender in the network (8), wherein preferably the immediate neighbours of each network participant record the time of sending and number of the last n, n = 1, 2, 3,..., data or data packets of that network participant and, when a threshold value is reached, a warning signal is generated and/or the relevant data or data packets are discarded.

19. Method according to at least one of the preceding claims, **characterised in that** in the network (8) data packets are collected and combined at network hubs, preferably on the basis of relevant data that belong together, and then forwarded preferably in a regular cycle, or data entering at the relevant hub are forwarded immediately if they are more up-to-date than data already present in the hub.

20. Method according to at least one of the preceding claims, **characterised in that** the data transmission in the network (8) takes place optically or electrically, preferably unidirectionally.

21. Control system having rotors for an aircraft in the form of a multicopter which has a plurality of redundant rotors (4), preferably arranged in a common rotor plane, in order, on the one hand, to generate lift and, on the other hand, by inclination of the at least one rotor plane, also to generate propulsion, wherein attitude regulation and control of the multicopter are effected by alterations to rotor speeds in dependence upon pilot control commands, the rotors (4) being in data-transmitting connection with one another via a fail-safe network (8), which is implemented with multiple redundancy, and being designed to communicate their respective operating states, especially their rotor speeds, in the network (8);
the network (8) contains a second plurality of controllers (7) which are each designed to determine, autonomously and decentrally with reference to sensor data, and preferably also with reference to the rotor operating states, a control signal for at least one rotor (4) and to make that control signal available in the network (8);
wherein the rotors (4) are controllable by means of the control signals so that a flight characteristic of the multicopter corresponds substantially to what has been specified by the pilot control command;
**characterised in that**
the network (8) contains a first plurality of distributed, redundant sensor units (9) which are designed to determine control-relevant data of the multicopter relating to inclination, acceleration, yaw rate and/or position in all three spatial axes of the multicopter and to make that data available as the sensor data in the network (8);
preferably for carrying out the method according to any one of claims 1 to 20.

22. System according to claim 21, **characterised in that** for supplying electrical power to the rotors (4), controllers (7) and sensors (9 b,c,d) there is provided a third plurality of power supply units, preferably in the form of a corresponding plurality of rechargeable batteries, the second plurality preferably corresponding to the number of rotors (4) and/or the third plurality corresponding to the number of rotors (4) and/or the second plurality corresponding to the third plurality.

23. System according to claim 21 or 22, **characterised in that** the network (8) is constructed and configured so that an exchange of data between the rotors (4) and/or controllers (7) and/or sensors (9 b,c,d) is effected by means of data distribution, especially data flooding, in the network (8).

24. System according to at least one of preceding claims 21 to 23, **characterised in that** the network (8) is constructed and configured so that output signals of all sensors (9 b,c,d) are transmissible to all controllers (7).

25. System according to at least one of preceding claims 21 to 24, **characterised in that** each network hub in the form of a sensor (9 b,c,d), controller (7) or rotor (4) is designed and configured to regularly emit a status signal in the network (8).

26. System according to at least one of preceding claims 21 to 25, **characterised in that** the controllers (7) are designed to compare output signals of the sensors (9 b,c,d) with one another, and to make a selection of an actual value describing the flight condition of the multicopter by median formation, with sensor values lying outside a defined range preferably being ignored.

27. System according to at least one of preceding claims 21 to 26, **characterised in that** the controllers (7) are designed to compare output signals of the sensors (9 b,c,d) with one another and, in the event of the sensor values being scattered beyond a defined range, to generate a warning signal and/or to issue a warning message for the pilot.

28. System according to at least one of preceding claims 21 to 27, **characterised in that** at least some of the controllers (7), preferably all controllers (7), are each designed to provide a control signal for more than one rotor (4), preferably for all rotors (4).

29. System according to at least one of preceding claims 21 to 28, **characterised in that** the controllers (7) are designed to compare output signals of the controllers (7) with one another and, in the event of the relevant controlled variables being scattered beyond a defined range, to generate a warning signal and/or to issue a warning message for the pilot.

30. System according to at least one of preceding claims 21 to 29, **characterised in that** the controllers (7) are designed to compare output signals of the controllers (7) with one another, and to make a selection of a controlled variable for a given rotor (4) by median formation, with control values lying outside a defined range preferably being ignored, there most preferably being no fixed allocation of the rotors (4) to the controllers (7).

31. System according to at least one of preceding claims 21 to 30, **characterised by** a display (11b) which is implemented with at least single redundancy and is designed to display a flight condition or operating state of the aircraft to the pilot, which display (11b) is configured to receive all the data communicated in the network (8) similarly to a data sink, to regularly check that data for consistency and, in the event of inconsistency and/or the presence of a warning signal according to claim 27 or claim 29, to inform the pilot by a corresponding display and preferably request landing.

32. System according to at least one of preceding claims 21 to 31, **characterised by** redundant operating elements (11 c,d) for pilot control commands, such as switches or joysticks, the output signals of which are made available at all units present in the network (8), such as sensors (9 b,c,d), controllers (7) and/or rotors (4), with the controllers (7) preferably being desgined to effect a decentralised assessment of the pilot control commands.

33. System according to at least one of preceding claims 21 to 32, **characterised in that** for selection of an active operating element (11c) for pilot control commands, such as a joystick, from a plurality of redundant operating elements there are provided a plurality, preferably all, of the relevant selection elements (11d), for example change-over switches (11d), the system being designed so that as active operating element there is selected that operating element for which a majority of the selection elements indicate a corresponding selection status.

34. System according to at least one of preceding claims 21 to 33, **characterised in that** the network (8) is configured so that there are forwarded only data and data packets in which a constantly updated forwarding counter value has not exceeded a preset threshold value and/or which do not originate from a currently forwarding network participant itself.

35. System according to at least one of preceding claims 21 to 34, **characterised in that** the network (8) is configured so that rate limitation is effected for each sender in the network (8), wherein preferably the immediate neighbours of each network participant are configured to record the time of sending and number of the last n, n = 1, 2, 3,..., data or data packets of that network participant and,
when a threshold value is reached, to generate a warning signal and/or to discard the relevant data or data packets.

36. System according to at least one of preceding claims 21 to 35, **characterised in that** the network (8) is configured so that in the network (8) data packets are collected and combined at network hubs, preferably on the basis of relevant data that belong together, and then forwarded preferably in a regular cycle, or data entering at the relevant hub are forwarded immediately if they are more up-to-date than data already present in the hub.

37. System according to at least one of preceding claims 21 to 36, **characterised in that** the network (8) is designed for optical or electrical data transmission, preferably unidirectionally.

38. System according to at least one of preceding claims 21 to 37, **characterised in that** the network (8) is designed with multiple redundancy, preferably having a plurality of parallel buses, for example CAN buses, or in the form of a plurality of redundant networks, for example a multiple Ethernet each with a switch, or in the form of an intermeshed network, for example a two-dimensional torus, without a central element, such as, for example, a switch.

39. System according to at least one of preceding claims 21 to 38, **characterised in that** in the network (8) there are three or more, preferably four, connections to neighbouring hubs per network hub, wherein most preferably a first subset of connections, preferably two, are in the form of inputs (I1, I2) and a second subset of connections, preferably two, are in the form of outputs (O1, O2).

40. Aircraft in the form of a multicopter which has a plurality of redundant rotors (4), preferably arranged in a common rotor plane, each comprising at least one electric motor (1) and a propeller (3) in order, on the one hand, to generate lift and, on the other hand, by inclination of the at least one rotor plane in space, also to generate propulsion, wherein attitude regulation and control of the multicopter are effected by alterations to rotor speeds in dependence upon pilot control commands,
**characterised in that**
the multicopter has a control system according to any one of claims 21 to 39, which is preferably designed to carry out a method according to any one of claims 1 to 20.

## Revendications

1. Procédé de commande d'un appareil volant sous forme d'un multicoptère, qui présente plusieurs rotors (4) redondants, disposés de préférence dans un plan de rotor commun, afin de produire d'une part une force ascensionnelle et d'autre part également une force propulsive par inclinaison du plan de rotor au moins unique, sachant que la régulation de position et la commande du multicoptère s'effectuent par des modifications des régimes de rotation des rotors en fonction d'instructions de commande du pilote, sachant
que les rotors (4) sont reliés entre eux en matière de transmission de données par l'intermédiaire d'un réseau (8) à sûreté intégrée, qui est réalisé à redondance multiple, et communiquent dans le réseau (8) leur état de fonctionnement respectif, en particulier leur régime de rotation de rotor ;
que le réseau (8) comprend une deuxième pluralité de régulateurs (7), qui déterminent chacun de manière autonome et décentralisée, à l'aide de données de capteurs et de préférence en outre à l'aide des états de fonctionnement des rotors, un signal de régulation pour au moins un rotor respectif (4), et le mettent à disposition dans le réseau (8) ;
que les rotors (4) sont, au moyen des signaux de régulation, régulés de telle sorte qu'un comportement de vol du multicoptère correspond pour l'essentiel à l'ordre donné par l'instruction de commande du pilote,
**caractérisé en ce que** les données de capteurs sont déterminées dans le réseau (8) par une première pluralité d'unités de capteurs redondantes (9), réparties, qui déterminent et mettent à disposition dans le réseau (8) des données significatives pour la commande du multicoptère concernant l'inclinaison, l'accélération, la vitesse de rotation et/ou la position dans les trois axes spatiaux du multicoptère.

2. Procédé selon la revendication 1, **caractérisé en ce que** les rotors (4), les régulateurs (7) et les capteurs (9b, c, d) sont alimentés électriquement au moyen d'une troisième pluralité de fournisseurs d'électricité (10), de préférence une pluralité correspondante d'accumulateurs.

3. Procédé selon la revendication 1 ou 2, **caractérisé en ce que** la deuxième pluralité est égale au nombre de rotors (4) et/ou **en ce que** la troisième pluralité est égale au nombre de rotors (4) et/ou **en ce que** la deuxième pluralité est égale à la troisième pluralité.

4. Procédé selon au moins une des revendications précédentes, **caractérisé en ce qu'**un échange de données entre les rotors (4) et/ou les régulateurs (7) et/ou les capteurs (9b, c, d) s'effectue au moyen d'une distribution de données dans le réseau (8), en particulier d'une circulation de données.

5. Procédé selon au moins une des revendications précédentes, **caractérisé en ce que** les signaux de sortie de tous les capteurs (9b, c, d) sont transmis à tous les régulateurs (7).

6. Procédé selon au moins une des revendications précédentes, **caractérisé en ce que** chaque noeud de réseau sous la forme d'un capteur (9b, c, d), d'un régulateur (7) ou d'un rotor (4) émet régulièrement un signal d'état dans le réseau.

7. Procédé selon au moins une des revendications précédentes, **caractérisé en ce que** les signaux de sortie des capteurs (9b, c, d) sont comparés entre eux, de préférence par les régulateurs (7), et une sélection d'une valeur actuelle décrivant l'état de vol du multicoptère s'effectue par formation de médiane, sachant de préférence que les valeurs de capteurs situées en dehors d'une plage définie sont ignorées.

8. Procédé selon au moins une des revendications précédentes, **caractérisé en ce que** les signaux de sortie des capteurs (9b, c, d) sont comparés entre eux, de préférence par les régulateurs (7), et un signal d'avertissement est produit et/ou un message d'avertissement est affiché pour le pilote en cas de dispersion des valeurs de capteurs au-delà d'une plage définie.

9. Procédé selon au moins une des revendications précédentes, **caractérisé en ce qu'**au moins certains des régulateurs (7), de préférence tous les régulateurs (7), fournissent un signal de régulation pour respectivement plus d'un rotor (4), de préférence pour respectivement tous les rotors (4).

10. Procédé selon au moins une des revendications précédentes, **caractérisé en ce que** les signaux de sortie des régulateurs (7) sont comparés entre eux, de préférence par les régulateurs (7) eux-mêmes, et un signal d'avertissement est produit et/ou un message d'avertissement est affiché pour le pilote en cas de dispersion des signaux de régulation ou des grandeurs réglantes concernés au-delà d'une plage définie.

11. Procédé selon au moins une des revendications précédentes, **caractérisé en ce que** les signaux de sortie des régulateurs (7) sont comparés entre eux, de préférence par les régulateurs (7) eux-mêmes, et une sélection d'une grandeur réglante pour un rotor donné (4) s'effectue par formation de médiane, sachant de préférence que les valeurs réglantes situées en dehors d'une plage définie sont ignorées, sachant d'une manière préférée entre toutes qu'il n'existe pas d'affectation fixe des rotors (4) aux régulateurs (7).

12. Procédé selon au moins une des revendications précédentes en rattachement à la revendication 8 ou à la revendication 10, **caractérisé en ce que**, par le signal d'avertissement ou un signal dérivé de celui-ci, une marge de manoeuvre du pilote, en particulier un taux possible de montée ou de descente de l'appareil volant, est automatiquement limitée.

13. Procédé selon au moins une des revendications précédentes, **caractérisé en ce qu'**un état de vol ou de fonctionnement de l'appareil volant est affiché au pilote au moyen d'un afficheur (11b) réalisé à au moins une redondance, lequel afficheur (11b) reçoit toutes les données communiquées dans le réseau (8) à la manière d'un collecteur de données et vérifie régulièrement leur cohérence, suite à quoi, en cas d'incohérence et/ou de présence d'un signal d'avertissement selon la revendication 8 ou la revendication 10, le pilote est informé par un affichage correspondant et de préférence sommé d'atterrir.

14. Procédé selon au moins une des revendications précédentes, **caractérisé en ce que** des éléments opérationnels redondants (11c, d) sont mis à disposition pour les instructions de commande du pilote, tels que des commutateurs ou des leviers de commande, dont les signaux de sortie sont fournis à toutes les unités présentes dans le réseau (8), telles que capteurs (9b, c, d), régulateurs (7) et/ou rotors (4), sachant qu'une évaluation décentralisée des instructions de commande du pilote s'effectue par les régulateurs (7).

15. Procédé selon au moins une des revendications précédentes, **caractérisé en ce qu'**un démarrage de l'appareil volant n'est autorisé que si toutes les unités présentes dans le réseau (8), telles que capteurs (9b, c, d), régulateurs (7) et/ou rotors (4), signalent un état de fonctionnement correct et/ou si les données communiquées dans le réseau (8) sont cohérentes entre elles, ce qui comprend en particulier les états suivants :
a) les boutons de démarrage existants ou analogues signalent un état d'actionnement « démarrage » ; et/ou
b) tous les régulateurs (7) signalent un état de fonctionnement correct ; et/ou
c) tous les fournisseurs d'électricité (10) selon la revendication 2 signalent au moins un état de charge minimale, par exemple 80% ; et/ou
d) tous les éléments opérationnels (11c, d) pour les instructions de commande du pilote, tels que commutateurs ou leviers de commande, délivrent des valeurs cohérentes.

16. Procédé selon au moins une des revendications précédentes, **caractérisé en ce que**, pour sélectionner un élément opérationnel actif pour les instructions de commande du pilote, tel qu'un levier de commande (11c), parmi une pluralité d'éléments opérationnels redondants, on sélectionne comme élément opérationnel actif l'élément opérationnel pour lequel une majorité d'éléments de sélection concernés, de préférence tous, sélecteurs (11d) par exemple, affichent un état de sélection correspondant, sachant d'une manière préférée entre toutes que, pour l'élément opérationnel sélectionné, on sélectionne la médiane pour chaque paramètre opérationnel fourni.

17. Procédé selon au moins une des revendications précédentes, **caractérisé en ce que** seuls sont réacheminés dans le réseau (8) des paquets de données ou données pour lesquels un incrément de réacheminement actualisé en permanence n'a pas dépassé une valeur de seuil prédéfinie, et/ou qui ne proviennent pas d'un participant au réseau lui-même effectuant actuellement un réacheminement.

18. Procédé selon au moins une des revendications précédentes, **caractérisé en ce qu'**on effectue dans le réseau (8) une limitation de débit par expéditeur, sachant de préférence que les voisins immédiats de chaque participant au réseau enregistrent l'instant d'expédition et le nombre des n derniers (n = 1, 2, 3, ...) paquets de données ou données de ce participant au réseau et qu'en cas d'atteinte d'une valeur de seuil, un signal d'avertissement est produit et/ou les données ou paquets de données concernés sont rejetés.

19. Procédé selon au moins une des revendications précédentes, **caractérisé en ce que**, dans le réseau (8), les paquets de données sont collectés et regroupés aux noeuds de réseau, de préférence en fonction de l'appartenance commune des données concernées, puis sont réacheminés de préférence à une cadence régulière, ou **en ce que** les données arrivant au noeud concerné sont immédiatement réacheminées si elles sont plus actuelles que les données déjà présentes au noeud.

20. Procédé selon au moins une des revendications précédentes, **caractérisé en ce que** la transmission de données dans le réseau (8) s'effectue par voie optique ou électrique, de préférence de manière unidirectionnelle.

21. Système de commande avec des rotors pour un appareil volant sous forme d'un multicoptère, qui présente plusieurs rotors (4) redondants, disposés de préférence dans un plan de rotor commun, afin de produire d'une part une force ascensionnelle et d'autre part également une force propulsive par inclinaison du plan de rotor au moins unique, sachant que la régulation de position et la commande du multicoptère s'effectuent par des modifications des régimes de rotation des rotors en fonction d'instructions de commande du pilote, sachant
que les rotors (4) sont reliés entre eux en matière de transmission de données par l'intermédiaire d'un réseau (8) à sûreté intégrée, qui est réalisé à redondance multiple, et sont conçus pour communiquer dans le réseau (8) leur état de fonctionnement respectif, en particulier leur régime de rotation de rotor ;
que le réseau (8) comprend une deuxième pluralité de régulateurs (7), qui sont conçus pour déterminer chacun de manière autonome et décentralisée, à l'aide de données de capteurs et de préférence en outre à l'aide des états de fonctionnement des rotors, un signal de régulation pour au moins un rotor respectif (4), et le mettre à disposition dans le réseau (8) ;
sachant que les rotors (4) peuvent, au moyen des signaux de régulation, être régulés de telle sorte qu'un comportement de vol du multicoptère correspond pour l'essentiel à un ordre donné par l'instruction de commande du pilote,
**caractérisé en ce que** le réseau (8) comprend une première pluralité d'unités de capteurs redondantes (9), réparties, qui sont conçues pour déterminer, et mettre à disposition comme données de capteurs dans le réseau (8), des données significatives pour la commande du multicoptère concernant l'inclinaison, l'accélération, la vitesse de rotation et/ou la position dans les trois axes spatiaux du multicoptère ;
de préférence pour la mise en oeuvre du procédé selon l'une des revendications 1 à 20.

22. Système selon la revendication 21, **caractérisé en ce qu'**une troisième pluralité de fournisseurs d'électricité est présente pour l'alimentation électrique des rotors (4), régulateurs (7) et capteurs (9b, c, d), de préférence sous la forme d'une pluralité correspondante d'accumulateurs, sachant de préférence que la deuxième pluralité est égale au nombre de rotors (4) et/ou que la troisième pluralité est égale au nombre de rotors (4) et/ou que la deuxième pluralité est égale à la troisième pluralité.

23. Système selon la revendication 21 ou 22, **caractérisé en ce que** le réseau (8) est construit et aménagé de telle sorte qu'un échange de données entre les rotors (4) et/ou les régulateurs (7) et/ou les capteurs (9b, c, d) s'effectue au moyen d'une distribution de données dans le réseau (8), en particulier d'une circulation de données.

24. Système selon au moins une des revendications précédentes 21 à 23, **caractérisé en ce que** le réseau (8) est construit et aménagé de telle sorte que les signaux de sortie de tous les capteurs (9b, c, d) peuvent être transmis à tous les régulateurs (7).

25. Système selon au moins une des revendications précédentes 21 à 24, **caractérisé en ce que** chaque noeud de réseau sous la forme d'un capteur (9b, c, d), régulateur (7) ou rotor (4) est conçu et aménagé pour émettre régulièrement un signal d'état dans le réseau (8).

26. Système selon au moins une des revendications précédentes 21 à 25, **caractérisé en ce que** les régulateurs (7) sont conçus pour comparer entre eux les signaux de sortie des capteurs (9b, c, d), et entreprendre une sélection d'une valeur actuelle décrivant l'état de vol du multicoptère par formation de médiane, sachant de préférence que les valeurs de capteurs situées en dehors d'une plage définie sont ignorées.

27. Système selon au moins une des revendications précédentes 21 à 26, **caractérisé en ce que** les régulateurs (7) sont conçus pour comparer entre eux les signaux de sortie des capteurs (9b, c, d), et produire un signal d'avertissement et/ou donner lieu à un message d'avertissement pour le pilote en cas de dispersion des valeurs de capteurs au-delà d'une plage définie.

28. Système selon au moins une des revendications précédentes 21 à 27, **caractérisé en ce qu'**au moins certains des régulateurs (7), de préférence tous les régulateurs (7), sont conçus pour fournir un signal de régulation pour respectivement plus d'un rotor (4), de préférence pour respectivement tous les rotors (4).

29. Système selon au moins une des revendications précédentes 21 à 28, **caractérisé en ce que** les régulateurs (7) sont conçus pour comparer entre eux les signaux de sortie des régulateurs (7), et produire un signal d'avertissement et/ou donner lieu à un message d'avertissement pour le pilote en cas de dispersion des grandeurs réglantes concernées au-delà d'une plage définie.

30. Système selon au moins une des revendications précédentes 21 à 29, **caractérisé en ce que** les régulateurs (7) sont conçus pour comparer entre eux les signaux de sortie des régulateurs (7), et entreprendre une sélection d'une grandeur réglante pour un rotor donné (4) par formation de médiane, sachant de préférence que les valeurs réglantes situées en dehors d'une plage définie sont ignorées, sachant d'une manière préférée entre toutes qu'il n'existe pas d'affectation fixe des rotors (4) aux régulateurs (7).

31. Système selon au moins une des revendications précédentes 21 à 30, **caractérisé par** un afficheur (11b), réalisé à au moins une redondance, qui est conçu pour afficher au pilote un état de vol ou de fonctionnement de l'appareil volant, lequel afficheur (11b) est aménagé pour recevoir toutes les données communiquées dans le réseau (8) à la manière d'un collecteur de données, vérifier régulièrement leur cohérence et, en cas d'incohérence et/ou de présence d'un signal d'avertissement selon la revendication 27 ou la revendication 29, informer le pilote par un affichage correspondant et de préférence le sommer d'atterrir.

32. Système selon au moins une des revendications précédentes 21 à 31, **caractérisé par** des éléments opérationnels redondants (11c, d) pour les instructions de commande du pilote, tels que des commutateurs ou des leviers de commande, dont les signaux de sortie sont fournis à toutes les unités présentes dans le réseau (8), telles que capteurs (9b, c, d), régulateurs (7) et/ou rotors (4), sachant de préférence que les régulateurs (7) sont conçus pour entreprendre une évaluation décentralisée des instructions de commande du pilote.

33. Système selon au moins une des revendications précédentes 21 à 32, **caractérisé en ce qu'**une pluralité d'éléments de sélection concernés (11d), de préférence tous, sélecteurs (11d) par exemple, sont prévus pour sélectionner un élément opérationnel actif (11c) pour les instructions de commande du pilote, tel qu'un levier de commande, parmi une pluralité d'éléments opérationnels redondants, sachant que le système est conçu pour sélectionner comme élément opérationnel actif l'élément opérationnel pour lequel une majorité des éléments de sélection affichent un état de sélection correspondant.

34. Système selon au moins une des revendications précédentes 21 à 33, **caractérisé en ce que** le réseau (8) est configuré de telle sorte que seuls sont réacheminés des paquets de données ou données pour lesquels un incrément de réacheminement actualisé en permanence n'a pas dépassé une valeur de seuil prédéfinie, et/ou qui ne proviennent pas d'un participant au réseau lui-même effectuant actuellement un réacheminement.

35. Système selon au moins une des revendications précédentes 21 à 34, **caractérisé en ce que** le réseau (8) est configuré de telle sorte qu'on effectue dans le réseau (8) une limitation de débit par expéditeur, sachant de préférence que les voisins immédiats de chaque participant au réseau sont aménagés pour enregistrer l'instant d'expédition et le nombre des n derniers (n = 1, 2, 3, ...) paquets de données ou données de ce participant au réseau et pour, en cas d'atteinte d'une valeur de seuil, produire un signal d'avertissement et/ou rejeter les données ou paquets de données concernés.

36. Système selon au moins une des revendications précédentes 21 à 35, **caractérisé en ce que** le réseau (8) est configuré de telle sorte que, dans le réseau (8), les paquets de données sont collectés et regroupés aux noeuds de réseau, de préférence en fonction de l'appartenance commune des données concernées, puis sont réacheminés de préférence à une cadence régulière, ou que les données arrivant au noeud concerné sont immédiatement réacheminées si elles sont plus actuelles que les données déjà présentes au noeud.

37. Système selon au moins une des revendications précédentes 21 à 36, **caractérisé en ce que** le réseau (8) est conçu pour la transmission de données par voie optique ou électrique, de préférence de manière unidirectionnelle.

38. Système selon au moins une des revendications précédentes 21 à 37, **caractérisé en ce que** le réseau (8) est conçu à redondance multiple, de préférence avec plusieurs bus parallèles, par exemple des bus CAN, ou sous forme de plusieurs réseaux redondants, par exemple Ethernet multiple avec chaque fois un switch, ou en tant que réseau maillé, par exemple tore bidimensionnel, sans élément central, tel que switch par exemple.

39. Système selon au moins une des revendications précédentes 21 à 38, **caractérisé en ce que**, pour chaque noeud de réseau dans le réseau (8), trois ou davantage, de préférence quatre, connexions vers des noeuds voisins sont respectivement présentes, sachant d'une manière préférée entre toutes qu'un premier nombre inférieur de connexions, de préférence deux, sont réalisées sous forme d'entrées (I1, I2), et qu'un deuxième nombre inférieur de connexions, de préférence deux, sont réalisées sous forme de sorties (O1, O2).

40. Appareil volant sous forme d'un multicoptère, qui présente plusieurs rotors (4) redondants, disposés de préférence dans un plan de rotor commun, comprenant chacun au moins un moteur électrique (1) et une hélice (3), afin de produire d'une part une force ascensionnelle et d'autre part également une force propulsive par inclinaison du plan de rotor au moins unique dans l'espace, sachant que la régulation de position et la commande du multicoptère s'effectuent par des modifications des régimes de rotation des rotors en fonction d'instructions de commande du pilote,
**caractérisé en ce que** le multicoptère dispose d'un système de commande selon l'une des revendications 21 à 39, qui est de préférence conçu pour exécuter un procédé selon l'une des revendications 1 à 20.
